# EUROPEAN PATENT APPLICATION

(11) **EP 3 399 505 A1**
(43) Date of publication of application: **07.11.2018**
(21) Application number: 16881554.6
(22) Date of filing: 15.11.2016
(51) Int. Cl.: G07D 9/00

(54) **CURRENCY PROCESSING DEVICE, CHARGE CALCULATION DEVICE, CURRENCY PROCESSNG METHOD, AND CHARGE CALCULATION METHOD**

(30) Priority: 28.12.2015 JP 2015256780
(71) Applicant: Glory Ltd., Hyogo-ken 670-8567 (JP)
(72) Inventor: KATAOKA, Ryuji, Himeji-shi Hyogo 670-8567 (JP); UEDA, Mayumi, Himeji-shi Hyogo 670-8567 (JP); NAGAO, Mitsushi, Himeji-shi Hyogo 670-8567 (JP); MORISAWA, Atushi, Himeji-shi Hyogo 670-8567 (JP); NADA, Yayoi, Himeji-shi Hyogo 670-8567 (JP)
(74) Representative: Schwabe - Sandmair - Marx
(86) International application number: PCT/JP2016/083826
(87) International publication number: WO 2017/115574

(57) **Abstract**

One object is to calculate a fee that is appropriate for the labor involved in the delivery of the money by the person in charge of a secure transportation company and the like appropriately and efficiently. For this purpose, a weight of collection target money is measured by using a weight sensor, a delivery fee is calculated based on the weight of the money, number of the money by the denomination of the collection target money is counted, an amount of the collection target money is calculated based on the result of this counting, and a premium is calculated based on the amount of the collection target money.

## Description

### [Technical Field]

The present invention relates to a money handling apparatus, a fee calculating apparatus, a money handling method, and a fee calculation method capable of calculating a fee that is appropriate for the labor involved in the delivery of money by a person in charge of a secure transportation company and the like.

### [Background Art]

Conventionally, in a commercial facility such as a supermarket, a money handling apparatus called a proceeds of sales deposition machine is installed to store therein money such as proceeds of sales. A money cassette containing money arranged in this money handling apparatus is transported to a cash center at a regular interval by the secure transportation company and the like.

If an excessive quantity of money is stored in the money cassette of the money handling apparatus, a replacement worker replaces this money cassette with a new money cassette; however, this operation leads to a decrease in the efficiency. A money handling apparatus is known in the art that calculates a quantity of money that has been stored in the money cassette of the money handling apparatus and stops a money deposition process from a time point at which it is decided that the calculated quantity of money has exceeded a certain limit level.

For example, Patent Document 1 discloses a proceeds of sales deposition machine that calculates an overall weight of the money stored in the money cassette of the money handling apparatus, and basically stops a money deposition process from a time point at which it is decided that the calculated overall weight has exceeded a predetermined storing capacity limit level. This technique prevents an excessive burden on the replacement worker who handles the money cassette.

In this manner, the proceeds of sales deposition machine disclosed in Patent Document 1 prevents the overall weight of the money cassette from exceeding the predetermined storing capacity limit level thereby decreasing the workload on the replacement worker in replacing the money cassette.

### [Citation List]

### [Patent Document]

[PATENT DOCUMENT 1] Japanese Patent Application Laid-Open No. 2015-108909

### [Summary of Invention]

### [Technical Problem]

The secure transportation company and the like performs all the operations right from replacing the money cassette up to delivering the full money cassette to the cash center. Therefore, it need not only to pay the attention to the replacement operation of the money cassette by the replacement worker but also to see that a series of operations from the replacement of the money cassette up to the delivery of the money cassette to the cash center is performed efficiently.

Specifically, it is important for a delivery person of the secure transportation company, who delivers the money cassette to the cash center, that he/she is able to collect a fee that is appropriate for the labor involved in the series of operations, including the delivery of the money cassette, even if the overall weight of the money cassette exceeds the storing capacity limit level rather than suppressing the overall weight of the money cassette below a certain value.

From this fact, how to calculate the fee that is appropriate for the labor involved in the delivery of money by the person in charge of the secure transportation company and the like is an important task.

The present invention has been made in view of the above discussion. One object of the present invention is to provide a money handling apparatus, a fee calculating apparatus, a money handling method, and a fee calculation method capable of calculating appropriately and efficiently a fee that is appropriate for the labor involved in the delivery of money by the person in charge of the secure transportation company and the like.

### [Means for Solving Problems]

To solve the above problems and to achieve the above object, according to one aspect of the present invention, a money handling apparatus includes an inserting unit for inserting money; a storing unit for storing therein the money inserted from the inserting unit; a determining unit that determines a money quantity which is a quantity of the money stored in the storing unit; and a fee calculating unit that calculates a predetermined fee corresponding to the money quantity determined by the determining unit.

The above money handling apparatus further includes a memory for storing therein a fee table containing mapping of a plurality of money quantities with a corresponding fee. The fee calculating unit calculates the predetermined fee corresponding to the money quantity determined by the determining unit based on the fee table stored in the memory.

In the above money handling apparatus, the determining unit measures the money quantity stored in the storing unit by using a sensor arranged for the storing unit.

The above money handling apparatus further includes an acquiring unit that acquires number of each money stored in the storing unit; and a memory for storing therein a unit money quantity of each money. The determining unit determines the money quantity stored in the storing unit based on the number of each money acquired by the acquiring unit and the unit money quantity of each money stored in the memory.

The above money handling apparatus further includes an output unit that outputs one or both of the money quantity and the predetermined fee.

The above money handling apparatus further includes an output unit that outputs at least two among a first money quantity that is the money quantity stored in the storing unit, a first fee corresponding to the first money quantity, a second money quantity corresponding to a second fee that is next to the first fee in the fee table, the second fee, and a difference between the second money quantity and the first money quantity.

The above money handling apparatus further includes a restriction control unit that restricts insertion of the money in the inserting unit when the money quantity stored in the storing unit is equal to or more than a predetermined threshold.

The above money handling apparatus further includes an attribute information acquiring unit that acquires attribute information of a user. The restriction control unit restricts insertion of the money in the inserting unit based on the attribute information acquired by the attribute information acquiring unit when the money quantity stored in the storing unit is equal to or more than a predetermined threshold.

The above money handling apparatus further includes an accumulated money quantity memory that stores therein an accumulated money quantity obtained by accumulating the money quantities determined by the determining unit. The fee calculating unit calculates the predetermined fee corresponding to the accumulated money quantity stored in the accumulated money quantity memory.

The above money handling apparatus further includes a goods number input unit that inputs number of goods. The fee calculating unit calculates the predetermined fee corresponding to the money quantity determined by the determining unit and a fee corresponding to the number of goods input by the goods number input unit.

The above money handling apparatus further includes a goods quantity determining unit that determines a quantity of goods based on the number of goods input by the goods number input unit; and a goods fee calculating unit that calculates a fee based on the quantity of goods determined by the goods quantity determining unit.

According to another aspect of the present invention, a fee calculating apparatus includes a receiving unit that receives number of money; a memory that stores therein a unit money quantity of each money; a determining unit that determines a money quantity of a planned transaction based on the number of money received by the receiving unit and the unit money quantity of each money stored in the memory; and a fee calculating unit that calculates a predetermined fee corresponding to the money quantity determined by the determining unit.

The above fee calculating apparatus further includes a storing medium determining unit that determines a storing medium and number thereof for storing money corresponding to the money quantity determined by the determining unit.

According to still another aspect of the present invention, a money handling method includes recognizing money inserted in a predetermined inserting unit; storing in a predetermined storing unit the money recognized at the recognizing; determining a money quantity stored in the storing unit; and calculating a predetermined fee corresponding to the money quantity determined at the determining.

According to still another aspect of the present invention, a fee calculation method includes receiving number of money; determining a money quantity of a planned transaction based on the number of money received at the receiving and a unit money quantity of each money stored in a predetermined memory; and calculating a predetermined fee corresponding to the money quantity determined at the determining.

### [Advantageous Effects of Invention]

According to the present invention, insertion of money is received, the inserted money is stored, a money quantity stored is determined, and a predetermined fee corresponding to the determined money quantity is calculated. Therefore, a fee that is appropriate for the labor involved in the delivery of money by the person in charge of the secure transportation company and the like can be calculated appropriately and efficiently.

### [Brief Description of Drawings]

FIG. 1 is a view for explaining three situations of applying a fee calculation process according to the present invention.
FIG. 2 is a view for explaining a concept of a process for calculating in a coin deposition machine installed in a shop according to a first embodiment a fee for collecting proceeds of sales.
FIG. 3 is a cross-sectional view of the coin deposition machine according to the first embodiment for explaining an internal configuration of the coin deposition machine in which the coin deposition machine is cut in a plane parallel to a side surface thereof.
FIG. 4 is a cross-sectional view of the coin deposition machine according to the first embodiment for explaining an internal configuration of the coin deposition machine in which the coin deposition machine is cut in a plane parallel to a front surface thereof.
FIG. 5 is a functional block diagram of the internal configuration of the coin deposition machine according to the first embodiment.
FIGS. 6A to 6D indicate an example (1) of data stored in a memory of the coin deposition machine according to the first embodiment.
FIG. 7 indicates an example (2) of data stored in the memory of the coin deposition machine according to the first embodiment.
FIG. 8 is a flowchart of a process procedure for calculating the fee for collecting coins from the coin deposition machine according to the first embodiment.
FIG. 9 is a cross-sectional view of a banknote deposition machine according to the first embodiment for explaining an internal configuration of the banknote deposition machine in which the banknote deposition machine is cut in a plane parallel to a side surface thereof.
FIG. 10 is a functional block diagram of the internal configuration of the banknote deposition machine according to the first embodiment.
FIG. 11 is a flowchart of a process procedure for calculating the fee for collecting banknotes from the banknote deposition machine according to the first embodiment.
FIG. 12 is a view for explaining a concept of a process for calculating in a coin counting machine installed in a cash center according to a second embodiment a fee for collecting the proceeds of sales.
FIG. 13 is a cross-sectional view of the coin counting machine according to the second embodiment for explaining an internal configuration of the coin counting machine in which the coin counting machine is cut in a plane parallel to a front surface thereof.
FIG. 14 is a functional block diagram of the internal configuration of the coin counting machine according to the second embodiment.
FIG. 15 is a flowchart of a process procedure for calculating in the coin counting machine according to the second embodiment a fee for delivering coins.
FIG. 16 is a cross-sectional view of a banknote counting machine according to the second embodiment for explaining an internal configuration of the banknote counting machine in which the banknote counting machine is cut in a plane parallel to a side surface thereof.
FIG. 17 is a functional block diagram of the internal configuration of the banknote counting machine according to the second embodiment.
FIG. 18 a flowchart of a process procedure for calculating in the banknote counting machine according to the second embodiment a fee for delivering banknotes.
FIG. 19 is a view for explaining a concept of a process for calculating in a money request receiving machine installed in the cash center according to a third embodiment a delivery fee for delivering change fund.
FIG. 20 is a functional block diagram of an internal configuration of the money request receiving machine according to the third embodiment.
FIGS. 21A and 21B are views for explaining an example of data stored in a memory of the money request receiving machine according to the third embodiment.
FIG. 22 is a view for explaining contents of a voucher relating to a request for change fund issued by the money request receiving machine according to the third embodiment.
FIG. 23 is a flowchart of a process procedure for calculating in the money request receiving machine according to the third embodiment a fee for delivering the change fund.
FIG. 24 is a functional block diagram of an internal configuration of a money request receiving machine according to a fourth embodiment.
FIGS. 25A to 25C indicate an example (1) of data stored in a memory of the money request receiving machine according to the fourth embodiment.
FIG. 26 indicates an example (2) of data stored in the memory of the money request receiving machine according to the fourth embodiment.
FIG. 27 is a view for explaining contents of a voucher relating to a request for change fund issued by the money request receiving machine according to the fourth embodiment.
FIG. 28 is a functional block diagram of an internal configuration of a coin counting machine according to a fifth embodiment.
FIGS. 29A and 29B are views for explaining an example of data stored in a memory of the coin counting machine according to the fifth embodiment.
FIG. 30 is a flowchart of a process procedure for calculating in the coin counting machine according to the fifth embodiment a fee for collecting coins monthly.
FIG. 31 is a functional block diagram of an internal configuration of a coin counting machine according to a sixth embodiment.
FIGS. 32A and 32B are views for explaining an example of data stored in a memory of the coin counting machine according to the sixth embodiment.
FIG. 33 is a flowchart of a process procedure for calculating in the coin counting machine according to the sixth embodiment a fee for collecting coins per group.

### [Description of Embodiments]

Exemplary embodiments of a money handling apparatus, a fee calculating apparatus, a money handling method, and a fee calculation method according to the present invention are explained below in detail by referring to the accompanying drawings.

First to third embodiments explained below correspond to three different situations (three situations) to which a fee calculation process according to the present invention is applied. The first embodiment corresponds to a first situation in which the fee calculation process according to the present invention is applied to a proceeds of sales deposition machine installed in a shop. The second embodiment corresponds to a second situation in which the fee calculation process according to the present invention is applied to a money counting machine installed in a cash center. The third embodiment corresponds to a third situation in which the fee calculation process according to the present invention is applied to a money request receiving machine installed in the cash center. A fourth embodiment corresponds to a variation of the third embodiment, and fifth and sixth embodiments correspond to variations of the second embodiment.

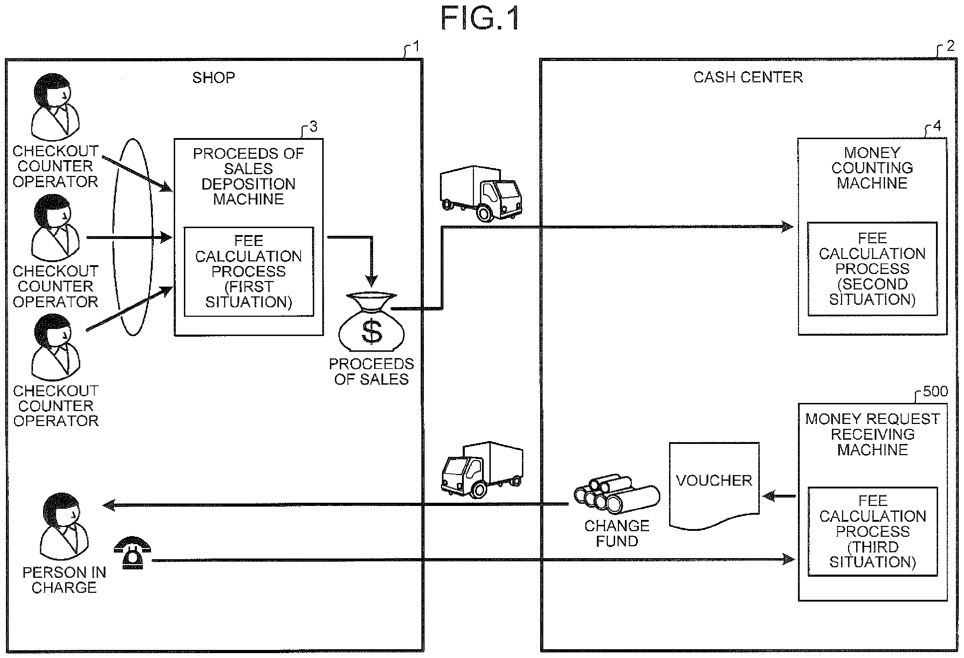

A detailed explanation is given below by using FIG. 1. Assume that a shop 1, in which a proceeds of sales deposition machine 3 is installed, and a cash center 2 are located at different locations. In this case, a cash box is collected from the proceeds of sales deposition machine 3 and delivered to the cash center 2. Thus, the first situation corresponds to performing in the proceeds of sales deposition machine 3 a fee calculation process for delivering the proceeds of sales. Specifically, when a checkout counter operator present at each of the checkout counters deposits the proceeds of sales in the proceeds of sales deposition machine 3, the money stored in the proceeds of sales deposition machine 3 goes on increasing. Therefore, a replacement worker replaces a money cassette arranged in the proceeds of sales deposition machine 3 at a regular interval, and a secure transportation company transports this money cassette to the cash center 2. The fee calculation process for delivering the proceeds of sales is performed when the replacement worker replaces the money cassette of the proceeds of sales deposition machine 3.

A money counting machine 4 that counts the proceeds of sales collected from the shop 1 is arranged in the cash center 2. Thus, the second situation corresponds to performing in the money counting machine 4 a fee calculation process for delivering the proceeds of sales. Specifically, the money contained in the money cassette transported from the shop 1 to the cash center 2 by the secure transportation company is counted by the money counting machine 4 of the cash center 2. Accordingly, the fee calculation process for delivering the proceeds of sales is performed when the counting of the money is performed by the money counting machine 4.

A money request receiving machine 500 is arranged in the cash center 2. The money request receiving machine 500 is a device that receives a money request for the change fund from a person in charge of the shop 1. The third situation corresponds to performing in the money request receiving machine 500 a fee calculation process for delivering the change fund. When the money request receiving machine 500 receives a money request for the change fund via a telephone or a terminal equipment possessed by the person in charge of the shop 1, an operation to deliver the change fund of an appropriate amount to the shop 1 is performed. Accordingly, the fee calculation process for delivering the change fund is performed when the money request receiving machine 500 receives the money request.

### FIRST EMBODIMENT

The fee calculation process for delivering the proceeds of sales performed in the proceeds of sales deposition machine 3 shown in FIG. 1 is explained below in detail as the first embodiment (first situation). To begin with, in the first embodiment, calculation of a fee for coins, which constitute a part of the proceeds of sales, is explained. The coins are heavy, and the handling thereof is a great burden on the secure transportation company. Therefore, it is important to calculate a fee that is appropriate for such burden. Note that, after having explained about the calculation of the fee for the coins, calculation of a fee for banknotes will be explained.

A money quantity that a person in charge of the secure transportation company and the like delivers is determined and a fee is calculated according to this money quantity. Therefore, one characteristic of the present invention is that the fee that is appropriate for the labor involved in the delivery of the money can be calculated appropriately and efficiently. The fee includes a delivery fee that is appropriate for the labor involved in the delivery of the money and a premium of insurance to compensate for any damage due to an accident or a crime during the delivery. The delivery fee is calculated according to a weight of the money to be delivered. The premium is calculated according to an amount of the money to be delivered.

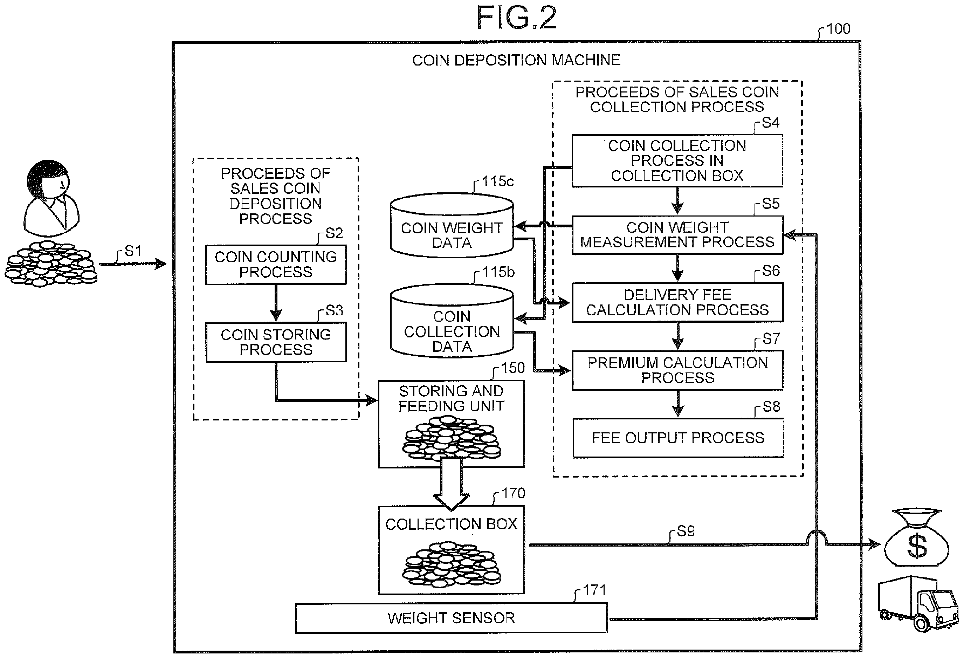

First of all, collection of the coins from a coin deposition machine 100 arranged in the shop 1 and delivery of the collected coins to the cash center 2 is explained. FIG. 2 is a view for explaining a concept of a process for calculating a fee for delivering the coins stored in the coin deposition machine 100 to the cash center 2.

As shown in FIG. 2, when the coins collected from each of the checkout counters of the shop 1 are inserted into a coin receiving inlet of the coin deposition machine 100 (Step S1), number of the coins by the denomination of the coins is counted (Step S2), and the coins are transported to storing and feeding units 150 and stored therein (Step S3) .

Upon receiving a predetermined operation for collecting the coins, the coin deposition machine 100 transports the coins from the storing and feeding unit 150 to a collection box 170 and stores therein the number of the coins by the denomination of the coins as coin collection data 115b (Step S4). The collection box 170 is equipped with a weight sensor 171. The weight sensor 171 measures a weight of the coins stored in the collection box 170, and the coin deposition machine 100 stores therein a result of this measurement as coin weight data 115c (Step S5).

The coin deposition machine 100 calculates the delivery fee based on the coin weight data 115c (Step S6), calculates the premium based on the number of the coins by the denomination of the coins (amount of the coins) contained in the coin collection data 115b (Step S7), and outputs the fee including the delivery fee and the premium to a display unit and the like (Step S8). The person in charge of the secure transportation company and the like collects the coins stored in the collection box 170 (Step S9) and delivers them to the cash center 2.

An example of calculating the fee for delivering the coins has been explained above; however, a fee for delivering the banknotes stored in a banknote deposition machine can be calculated similarly.

In this manner, in the first embodiment, the weight of the money is measured by using the weight sensor, the delivery fee is calculated based on the measured weight, number of the money by the denomination of the money is counted, and the premium is calculated based on the number of the money by the denomination of the money, that is, based on the amount of the money. Accordingly, the fee that is appropriate for the labor involved in the delivery of the money by the person in charge of the secure transportation company and the like is calculated appropriately and efficiently. Note that, a table containing a correspondence of weights and delivery fees, or a predetermined calculation equation, is used to calculate the delivery fee. Moreover, a table containing a correspondence of an amount of the money and a premium, or a predetermined calculation equation, is used to calculate the premium.

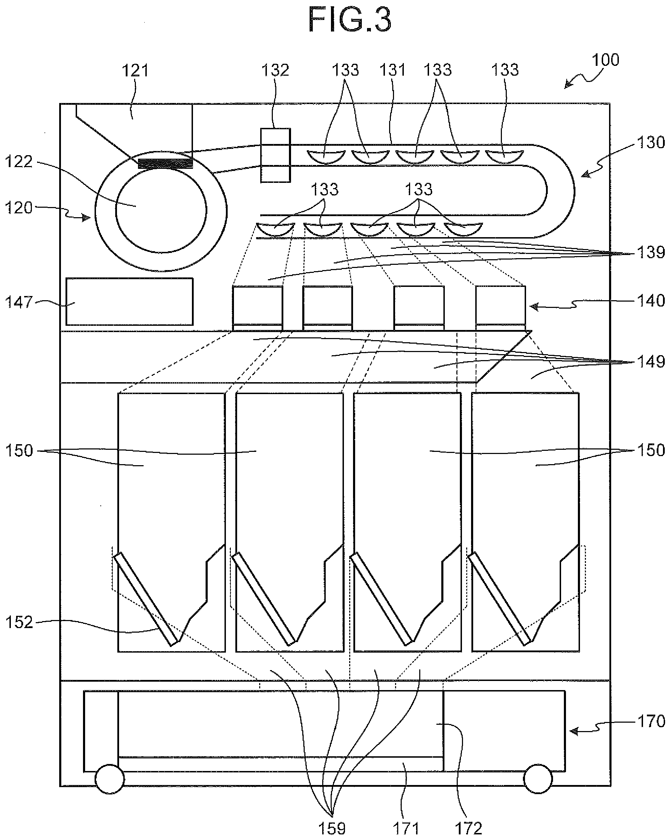

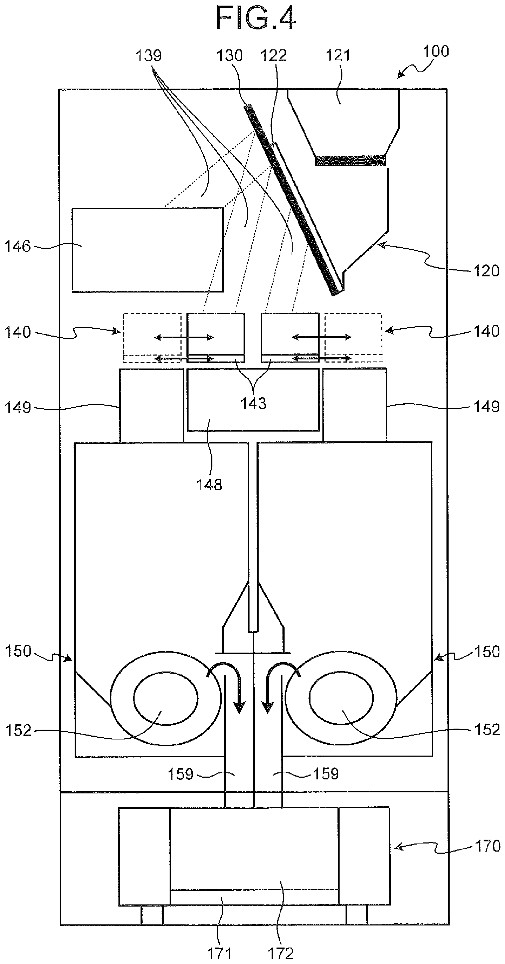

An internal configuration of the coin deposition machine 100 according to the first embodiment is explained below. FIG. 3 is a cross-sectional view of the coin deposition machine 100 when the coin deposition machine 100 is cut in a plane parallel to a side surface thereof, and FIG. 4 is a cross-sectional view of the coin deposition machine 100 when the coin deposition machine 100 is cut in a plane parallel to a front surface thereof.

A coin receiving inlet 121 is for receiving the coins inserted for deposition. The coins inserted in the coin receiving inlet 121 are once accumulated in an accumulation and feeding unit 120. The coins in the accumulation and feeding unit 120 are fed one by one by rotation of a rotary disk 122, and those coins are transported to a coin recognizing unit 130. The coin recognizing unit 130 includes a transport unit 131, a recognition unit 132, and a plurality of sorting members 133. The transport unit 131 transports the coin fed by the rotary disk 122 to the recognition unit 132. The recognition unit 132 is a processing unit that performs denomination recognition and authentication determination of the coin. The transport unit 131 transports the coin to an appropriate one of ten sorting members 133 based on a denomination recognition result and an authentication determination result obtained in the recognition unit 132. The sorting member 133 diverts the coin to a chute 139 corresponding to each of the sorting members 133 based on the denomination recognition result and the authentication determination result.

As shown in FIG. 3, the ten sorting members 133 are provided. The coin transported by the transport unit 131 is transported, via the chute 139 corresponding to each of the sorting members 133, to either of four escrow units 140, an overflow unit 146, and a reject unit 147. A coin that is determined to be an authentic coin among the coins transported by the transport unit 131 is transported to the escrow unit 140 determined based on the denomination of this coin.

As shown in FIG. 4, each of the escrow units 140 is movable between a position where it is shown with a solid line (above a returning unit 148) and a position where it is shown with a dotted line (above a chute 149). Moreover, the escrow unit 140 includes a slidable bottom part 143 on a box-shaped bottom part thereof . When the bottom part 143 is slid in a situation in which the escrow unit 140 is at the position at which it is shown with the solid line (above the returning unit 148), the coins present in the escrow unit 140 fall in the returning unit 148 and are stored therein.

In contrast, when the bottom part 143 is slid in a situation in which the escrow unit 140 is at the position at which it is shown with the dotted line (above the chute 149), the coins present in the escrow units 140 fall, via the chute 149, in the storing and feeding unit 150 arranged corresponding to the escrow unit 140 and are stored therein. The storing and feeding unit 150 is a unit for storing therein the deposited money by the denomination of the money.

The overflow unit 146 is a unit for storing therein a coin when the storing and feeding unit 150 corresponding to the denomination of this coin recognized by the recognition unit 132 is already filled with coins. The reject unit 147 is a unit for storing therein a coin whose denomination could not be recognized and/or a coin that could not be determined to be the authentic coin by the recognition unit 132. The reject unit 147 can be taken out of the coin deposition machine 100 by pulling the reject unit 147.

Each of the storing and feeding units 150 includes a rotary disk 152. The coins stored in the storing and feeding unit 150 can be fed one by one to a chute 159 by rotation of the rotary disk 152. The coins fed to the chute 159 drop inside the chute 159 and are stored in a drawer 172 of the collection box 170. The weight sensor 171 is arranged below the drawer 172. The weight sensor 171 measures a weight of the coins stored in the drawer 172. The collection box 170 can be pulled out from the coin deposition machine 100. After pulling the collection box 170 out, the coins stored in the drawer 172 can be taken out.

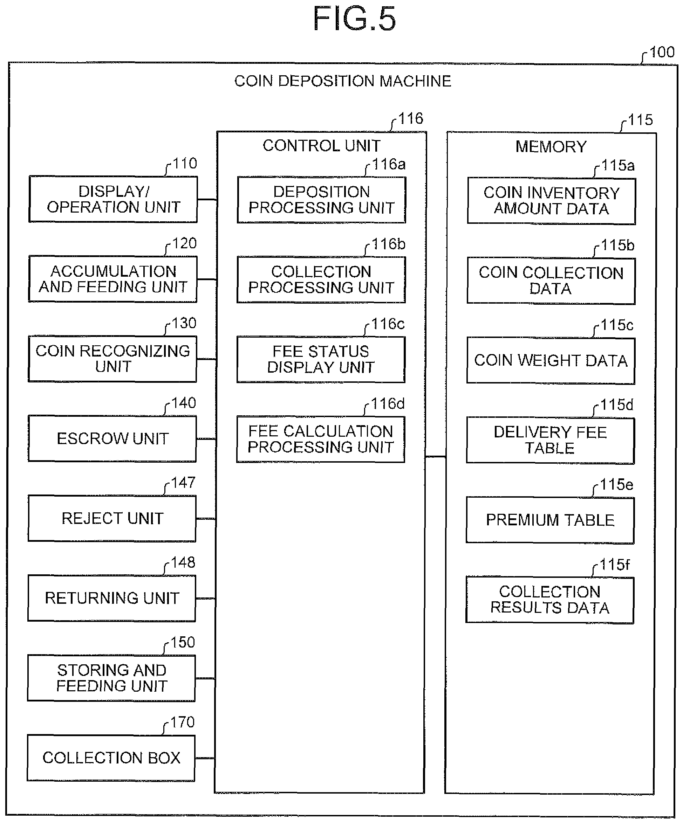

An internal configuration of the coin deposition machine 100 according to the first embodiment is explained below. FIG. 5 is a functional block diagram of the internal configuration of the coin deposition machine 100. As shown in FIG. 5, the coin deposition machine 100 includes a display/operation unit 110, the accumulation and feeding unit 120, the coin recognizing unit 130, the escrow units 140, the reject unit 147, the returning unit 148, the storing and feeding units 150, the collection box 170, a memory 115, and a control unit 116. The display/operation unit 110 is constituted by a touch panel liquid crystal display and the like and is used to display information and/or to receive input operations.

The memory 115 is a storage device constituted by a hard disk drive, a nonvolatile memory, and the like. Coin inventory amount data 115a, the coin collection data 115b, the coin weight data 115c, a delivery fee table 115d, a premium table 115e, and collection results data 115f are stored in the memory 115.

The coin inventory amount data 115a is data indicating the number of the coins by the denomination of the coins stored in the four storing and feeding units 150 and the overflow unit 146. The coin collection data 115b is data indicating the number of the coins by the denomination of the coins stored in the drawer 172 of the collection box 170. The coin weight data 115c is data indicating a result of measurement of the weight of the coins stored in the drawer 172. The delivery fee table 115d is a table used when calculating the delivery fee for delivering the coins from the shop 1 to the cash center 2. The premium table 115e is a table used when calculating the premium for delivering the coins from the shop 1 to the cash center 2. The collection results data 115f is data indicating a result of collection of the coins performed in the coin deposition machine 100. The collection results data 115f includes an amount, a weight, a delivery fee, a premium, and the like of the collected coins.

The control unit 116 is a control unit that controls the entire coin deposition machine 100. The control unit 116 includes a deposition processing unit 116a, a collection processing unit 116b, a fee status display unit 116c, and a fee calculation processing unit 116d. As a practical matter, a computer program corresponding to the deposition processing unit 116a, the collection processing unit 116b, the fee status display unit 116c, and the fee calculation processing unit 116d is stored in a not-shown nonvolatile memory and the like. A processing is performed by loading the corresponding computer program in a CPU (Central Processing Unit) and executing the computer program.

The deposition processing unit 116a is a processing unit that performs a money deposition process of the proceeds of sales. Specifically, the deposition processing unit 116a performs the denomination recognition process and the authentication determination process with respect to the coins inserted from the coin receiving inlet 121 to count the number of the coins by the denomination of the coins that are determined to be the authentic coins and updates the coin inventory amount data 115a based on the result of this counting. The deposition processing unit 116a provides a control to store the coins that are determined to be the authentic coins in the storing and feeding unit 150 or in the overflow unit 146. Moreover, the deposition processing unit 116a provides a control to transport to the reject unit 147 a coin whose denomination could not be recognized and/or a coin that could not be determined to be the authentic coin.

The collection processing unit 116b is a processing unit that makes it possible to collect a part or all of the coins stored in the storing and feeding unit 150 outside of the coin deposition machine 100. Specifically, upon receiving a specification of number of coins targeted for the collection, the collection processing unit 116b feeds the specified number of coins from the storing and feeding unit 150 and transports them to the drawer 172 of the collection box 170. Then, the coin collection data 115b is updated based on the number of the coins transported to the drawer 172. Moreover, the collection processing unit 116b registers the coin collection data 115b and information about the fee and the like calculated by the fee calculation processing unit 116d in the collection results data 115f. Moreover, the collection processing unit 116b displays the fee calculated by the fee calculation processing unit 116d on the display/operation unit 110.

The fee status display unit 116c is a processing unit that calculates the fee for collecting all the coins stored in the collection box 170 and/or in the overflow unit 146 and delivering those coins to the cash center 2 and displays information relating to the fee on the display/operation unit 110. The fee status display unit 116c determines the amount of the coins stored in the storing and feeding unit 150 based on the coin inventory amount data 115a and calculates the premium for those coins from the amount of the coins and the premium table 115e. Moreover, the fee status display unit 116c calculates the weight of the coins stored in the storing and feeding unit 150 or the overflow unit 146 based on a weight of one coin by the denomination of the coin and the coin inventory amount data 115a and calculates the delivery fee based on this calculated weight and the delivery fee table 115d.

A fee for each of various weight ranges of the coins to be delivered is defined in the delivery fee table 115d. Accordingly, the fee status display unit 116c also displays, in addition to the delivery fee corresponding to the weight of the coins at that time point, an upper limit of the weight permitted in the current weight range and the delivery fee corresponding to the next weight range. Moreover, a fee for each of various amount ranges of the coins to be delivered is defined in the premium table 115e. Accordingly, the fee status display unit 116c also displays, in addition to the premium corresponding to the amount of the coins at that time point, an upper limit of the amount permitted in the current amount range and the premium corresponding to the next amount range.

The fee calculation processing unit 116d calculates the amount of the coins stored in the drawer 172 based on the coin collection data 115b and calculates the premium by using the amount of the coins and the premium table 115e. Moreover, the fee calculation processing unit 116d acquires the weight of the coins stored in the drawer 172 that is measured by the weight sensor 171 and calculates the delivery fee by using the acquired weight of the coins and the delivery fee table 115d.

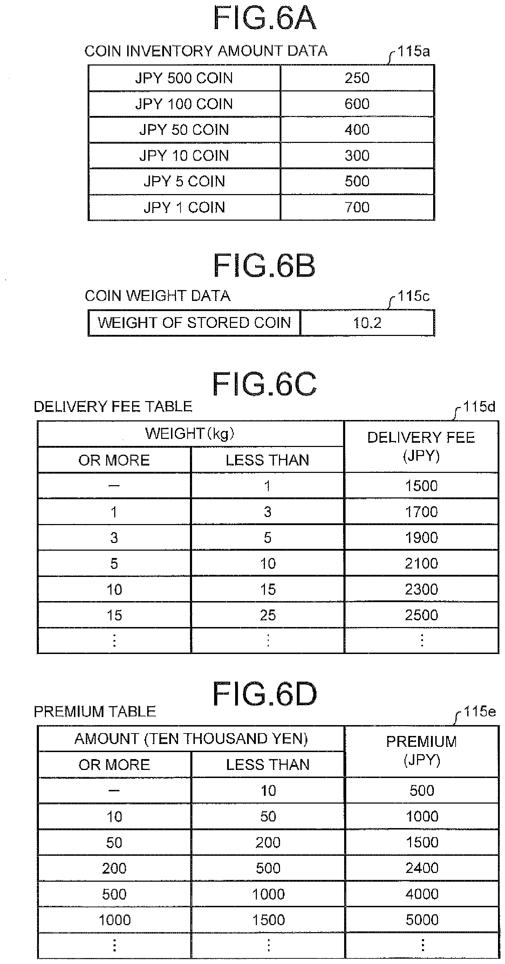

Examples of the data stored in the memory 115 of the coin deposition machine 100 according to the first embodiment is explained below. FIGS. 6A to 7 are views indicating the examples of the data stored in the memory 115 of the coin deposition machine 100.

The coin inventory amount data 115a shown in FIG. 6A is data containing the number of coins by the denomination of the coins. Though not shown in the drawings, the coin collection data 115b has the similar data structure as the coin inventory amount data 115a. In this example, 250 JPY 500 coins, 600 JPY 100 coins, 400 JPY 50 coins, 300 JPY 10 coins, 500 JPY 5 coins, and 700 JPY 1 coins are present.

The coin weight data 115c shown in FIG. 6B is data indicating the weight of the coins stored in the drawer 172. In this example, the weight of the coins stored in the drawer 172 is 10.2 kg.

The delivery fee table 115d shown in FIG. 6C is data in which the delivery fee is mapped with the weight range of the coins. In this example, the delivery fee for a weight that is less than 1 kg is JPY 1,500, the delivery fee for a weight that is equal to or more than 1 kg but less than 3 kg is JPY 1,700, the delivery fee for a weight that is equal to or more than 3 kg but less than 5 kg is JPY 1,900, the delivery fee for a weight that is equal to or more than 5 kg but less than 10 kg is JPY 2,100, the delivery fee for a weight that is equal to or more than 10 kg but less than 15 kg is JPY 2,300, and the delivery fee for a weight that is equal to or more than 15 kg but less than 25 kg is JPY 2,500. When an upper limit weight range of the coins has been set, the money deposition process for the weight of the coins that exceeds the upper limit weight range is restricted.

The premium table 115e shown in FIG. 6D is data in which the premium is mapped with the amount range of the coins to be delivered. In this example, the premium is JPY 500 for an amount that is less than JPY 100,000, the premium is JPY 1,000 for an amount that is equal to or more than JPY 100,000 but less than JPY 500,000, the premium is JPY 1,500 for an amount that is equal to or more than JPY 500,000 but less than JPY 2,000,000, the premium is JPY 2,400 for an amount that is equal to or more than JPY 2,000,000 but less than JPY 5,000,000, the premium is JPY 4,000 for an amount that is equal to or more than JPY 5,000,000 but less than JPY 10,000,000, and the premium is JPY 5,000 for an amount that is equal to or more than JPY 10,000,000 but less than JPY 15,000,000.

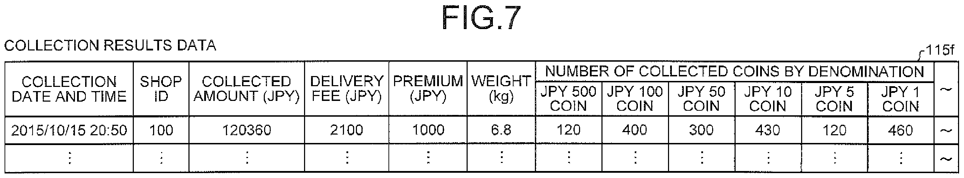

The collection results data 115f shown in FIG. 7 is data in which a shop ID, a collected amount, a delivery fee, a premium, a weight of the money to be delivered, and number of the collected money by the denomination of the money are mapped with a date and time on which the money is collected. In this example, the collection results data 115f in which the date and time "2015/10/15 20:50" on which the money is collected has been shown. In this collection results data 115f, the shop ID is 100, the collected amount is JPY 120,360, the delivery fee is JPY 2,100, the premium is JPY 1,000, and the weight of the delivered money is 6.8 kg. Moreover, regarding the number of the collected money by the denomination of the money, 120 JPY 500 coins, 400 JPY 100 coins, 300 JPY 50 coins, 430 JPY 10 coins, 120 JPY 5 coins, and 460 JPY 1 coins are present.

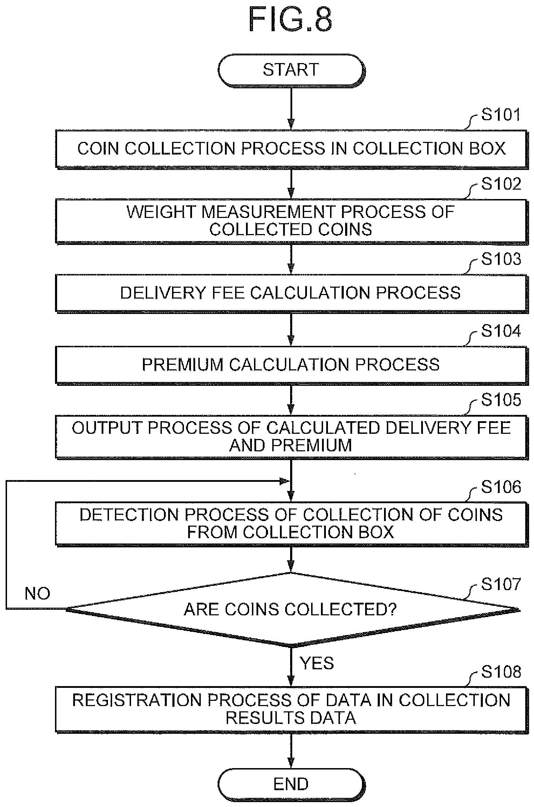

A process procedure for calculating a fee for collecting coins that are stored as the proceeds of sales in the coin deposition machine 100 according to the first embodiment is explained below. FIG. 8 is a flowchart of the process procedure for calculating the fee for collecting the coins from the coin deposition machine 100.

Upon receiving an instruction to collect the coins stored in the coin deposition machine 100, the collection processing unit 116b transports the collection target coins from the storing and feeding unit 150 to the drawer 172 of the collection box 170 and registers the number of the coins, which are transported to the drawer 172, by the denomination of the coins in the coin collection data 115b (Step S101) . The collection processing unit 116b acquires the weight measured by the weight sensor 171 of the coins stored in the drawer 172 and stores the weight in the coin weight data 115c (Step S102).

The fee calculation processing unit 116d calculates the delivery fee based on the delivery fee table 115d and the coin weight data 115c (Step S103) and calculates the premium based on the amount of the collection target money calculated based on the coin collection data 115b and the premium table 115e (Step S104). The fee calculation processing unit 116d displays on the display/operation unit 110 the calculated fee including the delivery fee and the premium (Step S105).

The collection processing unit 116b acquires information about whether the coins are collected from the drawer 172 of the collection box 170 (Step S106). If the acquired information indicates that the coins are collected (YES: Step S107), the collection processing unit 116b registers the result of the collection in the collection results data 115f and finishes the process (Step S108). The result of the collection includes the amount of the collected coins, the weight of the collected coins, the delivery fee, the premium, the number of the coins by the denomination of the collected coins, and the like. However, if the acquired information indicates that the coins are not yet collected (NO: Step S107), the process procedure returns to Step S106 and waits until the coins are collected from the drawer 172 of the collection box 170.

An internal configuration of a banknote deposition machine 200 according to the first embodiment is explained below.

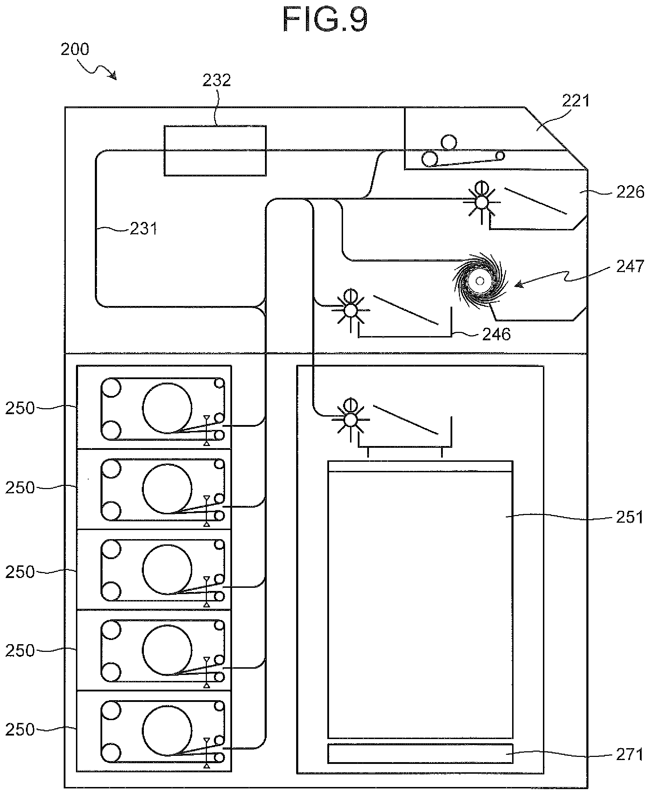

FIG. 9 is a cross-sectional view of the banknote deposition machine 200 in which the banknote deposition machine 200 is cut in a plane parallel to a side surface thereof.

A banknote receiving inlet 221 is for receiving the banknotes inserted for deposition. The banknotes inserted in the banknote receiving inlet 221 are fed one by one to a transport unit 231. A recognition unit 232 is arranged in a transport path of the transport unit 231. The recognition unit 232 is a processing unit that performs the denomination recognition and the authentication determination of the banknote transported by the transport unit 231. The transport unit 231 transports the banknote to an appropriate one of storing and feeding units 250, a reject unit 226, and a storing unit 251 based on a denomination recognition result and an authentication determination result obtained in the recognition unit 232. The storing and feeding units 250 are storing units that store therein the banknotes that are determined to be the genuine notes, after the recognition of the denomination is performed in the recognition unit 232, by the denomination of the banknote. The reject unit 226 is a stacking unit in which a banknote whose denomination could not be recognized by the recognition unit 232 and/or a banknote that could not be determined to be the authentic banknote by the recognition unit 232 is transported. The reject unit 226 has a configuration in which the banknotes can be taken out from the outside of the banknote deposition machine 200. After the recognition of the denomination is performed in the recognition unit 232, among the banknotes that are determined to be the genuine notes, if the storing and feeding unit 250 corresponding to the recognized denomination is already filled with the banknotes, the storing unit 251 is a unit that stores therein such a banknote.

The banknote deposition machine 200 is a device that can even discharge the banknotes and therefore includes a money removal outlet 247 and a reject box 246. The money removal outlet 247 is used to remove the banknotes fed from the storing and feeding unit 250. The reject box 246 is a storing unit that stores therein a reject banknote that is a banknote that cannot be discharged even if this banknote has been fed from the storing and feeding unit 250 in a banknote discharge process.

The storing unit 251 that can be taken out of the banknote deposition machine 200 by opening a front door of the banknote deposition machine 200. The storing unit 251 is a unit that is used for collecting the banknotes stored in the banknote deposition machine 200. To achieve this, the collection target banknotes stored in the storing and feeding unit 250 are first collected in the storing unit 251 and then the storing unit 251 is taken out of the banknote deposition machine 200 to take out the collection target banknotes. A weight sensor 271 is arranged below the storing unit 251. The weight sensor 271 is a sensor that measures a weight of the banknotes stored in the storing unit 251.

An internal configuration of the banknote deposition machine 200 according to the first embodiment is explained below.

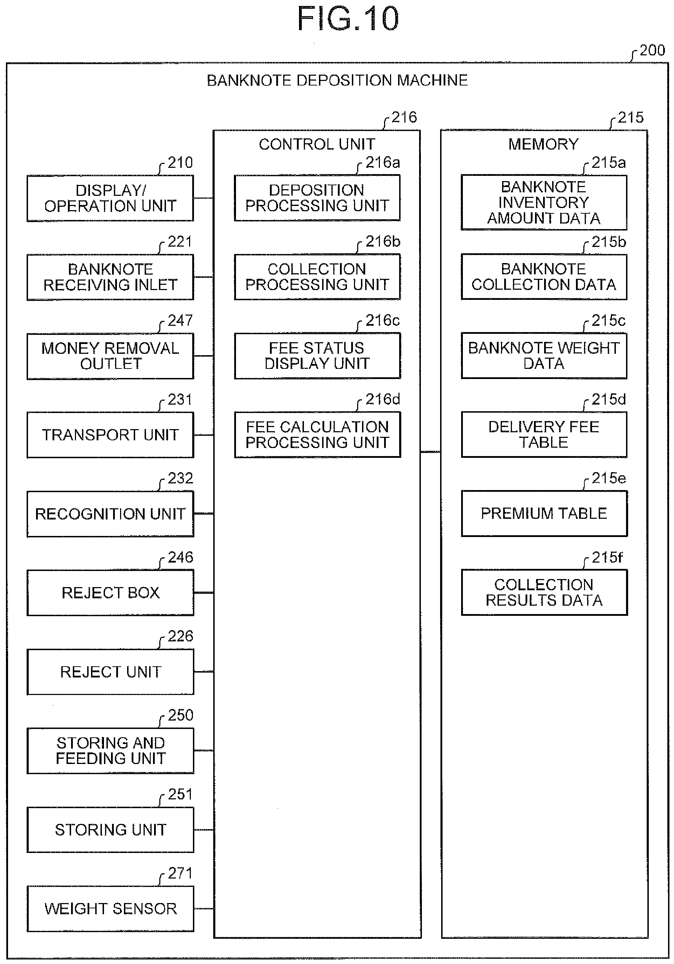

FIG. 10 is a functional block diagram of the internal configuration of the banknote deposition machine 200. As shown in FIG. 10, the banknote deposition machine 200 includes a display/operation unit 210, the banknote receiving inlet 221, the money removal outlet 247, the transport unit 231, the recognition unit 232, the reject box 246, the reject unit 226, the storing and feeding units 250, the storing unit 251, the weight sensor 271, a memory 215, and a control unit 216. The display/operation unit 210 is constituted by a touch panel liquid crystal display and the like and it is used to display information and/or to receive input operations.

The memory 215 is a storage device constituted by a hard disk drive, a nonvolatile memory, and the like. Banknote inventory amount data 215a, banknote collection data 215b, banknote weight data 215c, a delivery fee table 215d, a premium table 215e, and collection results data 215f are stored in the memory 215.

The banknote inventory amount data 215a is data indicating the number of banknotes by the denomination of banknotes stored in the five storing and feeding units 250. The banknote collection data 215b is data indicating the number of banknotes by the denomination of banknotes stored in the storing unit 251. The banknote weight data 215c is data indicating a result of measurement of the weight of the banknotes stored in the storing unit 251. The delivery fee table 215d is a table used when calculating the delivery fee for delivering the banknotes from the shop 1 to the cash center 2. The premium table 215e is a table used when calculating the premium for delivering the banknotes from the shop 1 to the cash center 2. The collection results data 215f is data indicating a result of collection of the banknotes performed in the banknote deposition machine 200. The collection results data 215f includes an amount, a weight, a delivery fee, a premium, and the like of the collected banknotes.

The control unit 216 is a control unit that controls the entire banknote deposition machine 200. The control unit 216 includes a deposition processing unit 216a, a collection processing unit 216b, a fee status display unit 216c, and a fee calculation processing unit 216d. As a practical matter, a computer program corresponding to the deposition processing unit 216a, the collection processing unit 216b, the fee status display unit 216c, and the fee calculation processing unit 216d is stored in a not-shown nonvolatile memory and the like. A processing is performed by loading the corresponding computer program in a CPU and executing the computer program.

The deposition processing unit 216a is a processing unit that performs a money deposition process of the proceeds of sales. Specifically, the deposition processing unit 216a performs the denomination recognition process and the authentication determination process with respect to the banknotes inserted from the banknote receiving inlet 221 to count the number of banknotes by the denomination of the banknotes that are determined to be the authentic banknotes and updates the banknote inventory amount data 215a based on the result of this counting. However, the number of banknotes by the denomination of banknotes stored in the storing unit 251 is reflected in the banknote collection data 215b. The deposition processing unit 216a provides a control to store the banknotes that are determined to be the authentic banknotes in the storing and feeding units 250 or in the storing unit 251. Moreover, the deposition processing unit 216a provides a control to transport to the reject unit 226 a banknote whose denomination could not be recognized and/or a banknote that could not be determined to be the authentic banknote.

The collection processing unit 216b is a processing unit that transports to the storing unit 251 a part or all of the banknotes stored in the storing and feeding unit 250 thereby making it possible to collect the banknotes stored in the storing unit 251. Specifically, upon receiving a specification of number of banknotes targeted for the collection, the collection processing unit 216b feeds the banknotes from the storing and feeding unit 250 to the storing unit 251 so that the number of the banknotes transported to and stored in the storing unit 251 is the same as the specified number, and then updates the banknote collection data 215b. The collection processing unit 216b registers the banknote collection data 215b and information about the fee and the like calculated by the fee calculation processing unit 216d in the collection results data 215f. Moreover, the collection processing unit 216b displays the fee calculated by the fee calculation processing unit 216d on the display/operation unit 210.

The fee status display unit 216c is a processing unit that calculates the fee for collecting all the banknotes stored in the storing and feeding units 250 or the storing unit 251 and delivering those banknotes to the cash center 2 and displays information relating to the fee on the display/operation unit 210. Based on the banknote inventory amount data 215a and the banknote collection data 215b, the fee status display unit 216c identifies the amount of the banknotes stored in the storing and feeding units 250 and the banknote collection data 215b and calculates a premium based on the amount of the banknotes and the premium table 215e. Moreover, the fee status display unit 216c calculates the weight of the banknotes stored in the storing and feeding units 250 or the storing unit 251 based on a weight of one banknote by the denomination of the banknote, the banknote inventory amount data 215a, and the banknote collection data 215b and calculates the delivery fee based on the weight of the banknotes and the delivery fee table 215d.

A fee for each of various weight ranges of the coins to be delivered are defined in the delivery fee table 215d. Accordingly, the fee status display unit 216c also displays, in addition to the delivery fee corresponding to the weight of the banknotes at that time point, an upper limit of the weight permitted in the current weight range and the delivery fee corresponding to the next weight range. Moreover, a fee for each of various amount ranges of the banknotes to be delivered are defined in the premium table 215e. Accordingly, the fee status display unit 216c also displays, in addition to the premium corresponding to the amount of the banknotes at that time point, an upper limit of the amount permitted in the current amount range and the premium corresponding to the next amount range.

The fee calculation processing unit 216d calculates the amount of the banknotes stored in the storing unit 251 based on the banknote collection data 215b and calculates the premium by using the amount of the banknotes and the premium table 215e. Moreover, the fee calculation processing unit 216d acquires the weight measured by the weight sensor 271 of the banknotes stored in the storing unit 251 and calculates the delivery fee by using the weight of the banknotes and the delivery fee table 215d. Note that, instead of using the weight sensor 271, the weight of the banknotes stored in the storing unit 251 can be calculated based on the weight of one banknote by the denomination of the banknote and the number of banknotes.

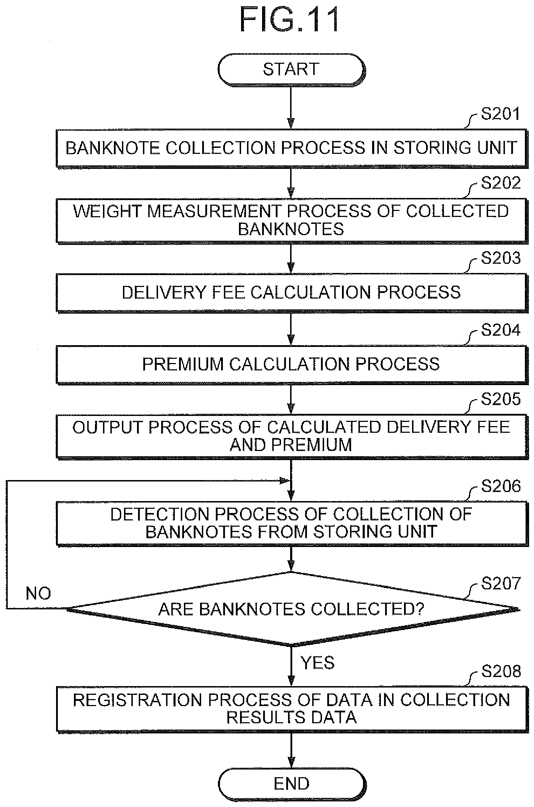

A process procedure for calculating in the banknote deposition machine 200 according to the first embodiment a fee for collecting banknotes that are stored as the proceeds of sales is explained below. FIG. 11 is a flowchart of a process procedure for calculating the fee for collecting the banknotes from the banknote deposition machine 200.

Upon receiving an instruction to collect the banknotes stored in the banknote deposition machine 200, the collection processing unit 216b transports the collection target banknotes from the storing and feeding unit 250 to the storing unit 251 and stores the number of the banknotes, which are transported to the storing unit 251, by the denomination of the banknotes in the banknote collection data 215b (Step S201). The collection processing unit 216b acquires the weight measured by the weight sensor 271 of the banknotes stored in the storing unit 251 and stores the weight in the banknote weight data 215c (Step S202).

The fee calculation processing unit 216d calculates the delivery fee based on the delivery fee table 215d and the banknote weight data 215c (Step S203) and calculates the premium based on the amount of the collection target banknotes calculated based on the banknote collection data 215b and the premium table 215e (Step S204). The fee calculation processing unit 216d displays on the display/operation unit 210 the calculated fee including the delivery fee and the premium (Step S205).

The collection processing unit 216b acquires information about whether the banknotes are collected from the storing unit 251 (Step S206) . If the acquired information indicates that the banknotes are collected (YES: Step S207), the collection processing unit 216b registers a result of collection in the collection results data 215f and finishes the process (Step S208) . The result of the collection includes the amount of the collected banknotes, the weight of the collected banknotes, the delivery fee, the premium, the number of the banknotes by the denomination of the collected banknotes, and the like. However, if the acquired information indicates that the banknotes are not yet collected (NO: Step S207), the process procedure returns to Step S206 and waits until the banknotes are collected from the storing unit 251.

As has been explained above, in the first embodiment, the number of the money by the denomination of the collection target money is counted, the weight of the collection target money is measured by using the weight sensors 171 and 271, the premium is calculated based on the amount of the money corresponding to the number of the money by the denomination of the collection target money, the delivery fee is calculated based on the weight of the money, and the fee is calculated based on the delivery fee and the premium. With this configuration, the fee that is appropriate for the labor involved in the delivery of the money handled by the person in charge of the secure transportation company can be calculated appropriately and efficiently.

Note that, in the first embodiment, the explanation has been given assuming that the coin deposition machine 100 and the banknote deposition machine 200 are separate devices; however, the present invention is not limited to this configuration. For example, the coin deposition machine 100 and the banknote deposition machine 200 can be integrated in one device and the premium can be calculated based on the total amount of the collected coins and banknotes and the delivery fee can be calculated based on the total weight of the collected coins and banknotes. In another configuration in which the coin deposition machine 100 and the banknote deposition machine 200 are separate devices, for example, the banknote deposition machine 200 can be notified of the amount and the weight of the coins collected from the coin deposition machine 100, and in the banknote deposition machine 200, the premium can be calculated based on the total amount of the collected coins and banknotes and the delivery fee can be calculated based on the total weight of the collected coins and banknotes. In contrast, the coin deposition machine 100 can be notified of the amount and the weight of the banknotes collected from the banknote deposition machine 200. In another configuration, a management apparatus can be arranged in addition to the coin deposition machine 100 and the banknote deposition machine 200, the management apparatus can be notified of the amount and the weight of the coins collected from the coin deposition machine 100, the management apparatus can be notified of the amount and the weight of the banknotes collected from the banknote deposition machine 200, and in the management apparatus, the premium can be calculated based on the total amount of the collected coins and banknotes and the delivery fee can be calculated based on the total weight of the collected coins and banknotes.

### SECOND EMBODIMENT

In the first embodiment, an example has been explained in which the delivery fee and the premium are calculated in the coin deposition machine 100 and the banknote deposition machine 200 installed in the shop 1 for delivering the proceeds of sales from the shop 1 to the cash center 2. In the second embodiment, an example is explained in which an apparatus that counts the money collected from the shop 1 is installed in the cash center 2, and a delivery fee and a premium for delivering the proceeds of sales are calculated by this apparatus. Even in the second embodiment, like in the first embodiment, calculation of a fee for the coins, which constitute a part of the proceeds of sales, is explained first, and then calculation of the fee for the banknotes will be explained.

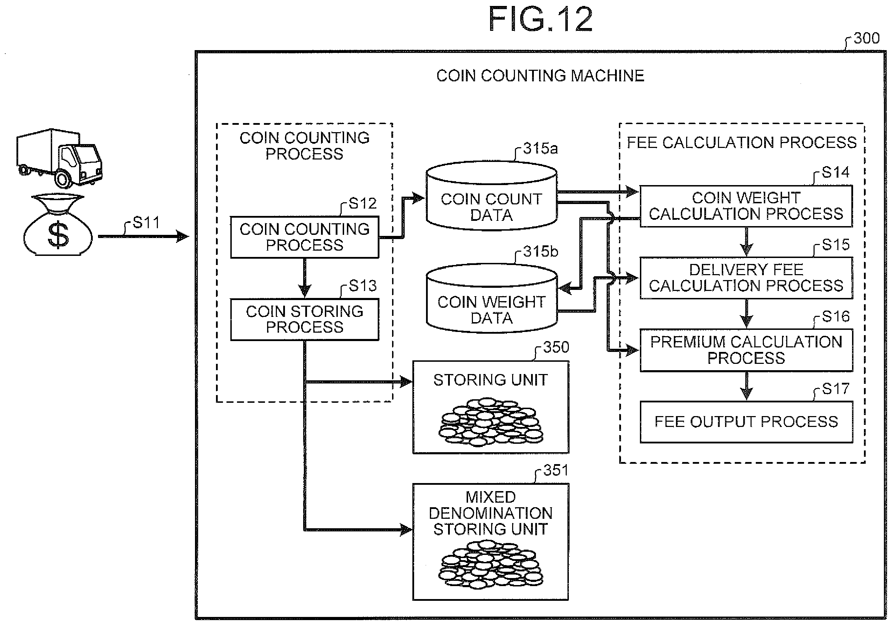

To begin with, a concept of a process procedure for calculating in a coin counting machine 300 installed in the cash center 2 according to the second embodiment a fee for collecting the proceeds of sales is explained. FIG. 12 is a view for explaining the concept of the process procedure for calculating in the coin counting machine 300 installed in the cash center 2 the fee for collecting the proceeds of sales.

When the coins delivered from the shop 1 to the cash center 2 are inserted in a coin insertion opening of the coin counting machine 300 (Step S11), the coin counting machine 300 counts number of the coins by the denomination of the inserted coins and stores a result of this counting in a memory as coin count data 315a (Step S12). Moreover, the coin counting machine 300 stores the counted coins in a storing unit 350 or in a mixed denomination storing unit 351 (Step S13).

The coin counting machine 300 calculates the weight of the inserted coins by using the coin count data 315a and a weight of one coin by the denomination of the coin and stores a result of this calculation in the memory as coin weight data 315b (Step S14) . The coin counting machine 300 calculates the delivery fee based on the coin weight data 315b (Step S15), calculates the premium based on the amount of the inserted coins (Step S16), and outputs the fee including the delivery fee and the premium to a display unit and the like (Step S17).

In the example shown in FIG. 12, the fee for delivering the coins from the shop 1 to the cash center 2 is calculated; however, the fee for delivering the banknotes can also be calculated in a banknote counting machine. In this manner, the number of the money by the denomination of the delivered money is counted, the weight of the delivered money is calculated, the premium is calculated based on the amount of the money corresponding to the number of the money by the denomination of the delivered money, the delivery fee is calculated based on the weight of the delivered money, and the fee is calculated based on the delivery fee and the premium. With this configuration, the fee that is appropriate for the labor involved in the delivery of the money handled by the person in charge of the secure transportation company can be calculated appropriately and efficiently.

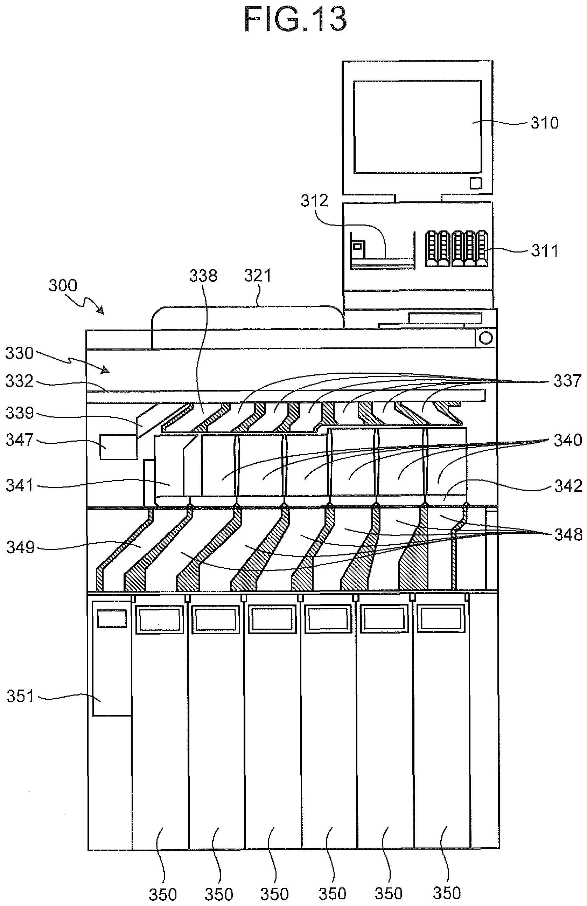

An internal configuration of the coin counting machine 300 according to the second embodiment is explained below. FIG. 13 is a cross-sectional view of the coin counting machine 300 when the coin counting machine 300 is cut in a plane parallel to a front surface thereof.

The coin counting machine 300 has a coin insertion opening 321 for inserting the counting target coins. The coins inserted in the coin insertion opening 321 are subjected by a coin recognizing unit 330 to the denomination recognition process, the authentication determination process, and the counting process of counting the number of the coins by the denomination of the coins determined to be the authentic coins. The coins that are subjected to the denomination recognition and the authentication determination by the coin recognizing unit 330 are sorted via a sorting member 332 to chutes 337, 338, and 339 based on results obtained in the denomination recognition process and the authentication determination process.

The sorting member 332 sorts to the chute 339 a coin whose denomination could not be recognized and/or a coin that is determined to be not the authentic coin by the coin recognizing unit 330. As shown in FIG. 13, the chute 339 transports this coins to a reject unit 347. The reject unit 347 is a unit to which the coin whose denomination could not be recognized and/or the coin that is determined to be not the authentic coin is transported among the coins inserted in the coin insertion opening 321.

The sorting member 332 sorts the coin that is determined to be the authentic coin by the coin recognizing unit 330 to the chute 338 corresponding to an escrow unit 341, in which coins of mixed denominations are accumulated, when the storing unit 350 corresponding to the denomination of this coin determined based on the denomination recognition result of this coin is already filled with coins. The sorting member 332 sorts the coin that is determined to be the authentic coin by the coin recognizing unit 330 to one of the chutes 337 corresponding to one of escrow units 340, provided by the denomination, when the storing unit 350 corresponding to the denomination of this coin determined based on the denomination recognition result of this coin is not filled with coins.

Moreover, the escrow units 340 and 341 include a slidable bottom plate 342 on a box-shaped bottom part thereof. By sliding the bottom plate 342, the coins accumulated in the escrow units 340 and 341 can be transported via chutes 348 and 349 to the storing units 350, arranged corresponding to each of the escrow units 340 and 341, or the mixed denomination storing unit 351. One storing unit 350 is arranged corresponding to one denomination. The mixed denomination storing unit 351 is a unit for storing therein an overflow coin that is a coin that could not be stored in the storing unit 350 corresponding to the denomination of this coin.

As shown in FIG. 13, the coin counting machine 300 includes a display unit 310, an operation unit 311, and a printer unit 312. The display unit 310 is a display device such as a liquid crystal display, and the like. The operation unit 311 is an input device such as a keyboard, a mouse, and the like. The printer unit 312 is a printer such as a laser beam printer and a thermal printer. The printer unit 312 prints on a paper medium results of various processes performed in the coin counting machine 300.

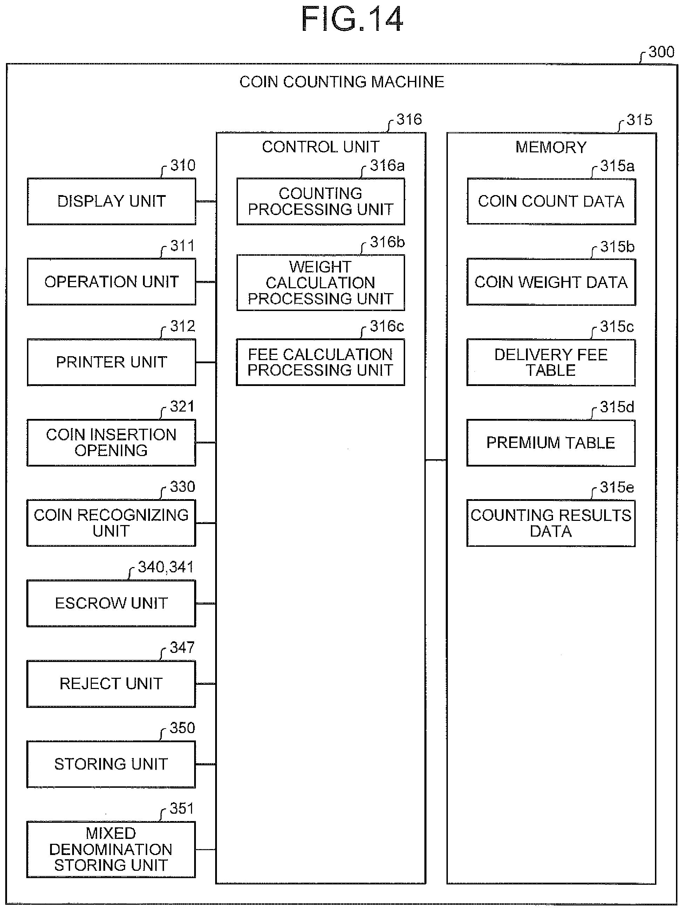

An internal configuration of the coin counting machine 300 according to the second embodiment is explained below. FIG. 14 is a functional block diagram of the internal configuration of the coin counting machine 300. As shown in FIG. 14, the coin counting machine 300 includes the display unit 310, the operation unit 311, the printer unit 312, the coin insertion opening 321, the coin recognizing unit 330, the escrow units 340 and 341, the reject unit 347, the storing units 350, the mixed denomination storing unit 351, a memory 315, and a control unit 316.

The memory 315 is a storage device constituted by a hard disk drive, a nonvolatile memory, and the like. The memory 315 stores therein the coin count data 315a, the coin weight data 315b, a delivery fee table 315c, a premium table 315d, and counting results data 315e.

The coin count data 315a is data indicating a result of counting obtained by counting the coins inserted in the coin insertion opening 321. The coin weight data 315b is data calculated based on the coin count data 315a and is the data indicating the weight of the coins inserted in the coin insertion opening 321. The delivery fee table 315c is a table used when calculating the delivery fee for delivering the coins from the shop 1 to the cash center 2. The premium table 315d is a table used when calculating the premium for delivering the coins from the shop 1 to the cash center 2. The counting results data 315e is data indicating a result of a counting process of the coins performed in the coin counting machine 300. The counting results data 315e includes an amount, a weight, a delivery fee, a premium, and the like of the counted coins.

The control unit 316 is a control unit that controls the entire coin counting machine 300. The control unit 316 includes a counting processing unit 316a, a weight calculation processing unit 316b, and a fee calculation processing unit 316c. As a practical matter, a computer program corresponding to the counting processing unit 316a, the weight calculation processing unit 316b, and the fee calculation processing unit 316c is stored in a not-shown nonvolatile memory and the like. A processing is performed by loading the corresponding computer program in a CPU and executing the computer program.

The counting processing unit 316a performs the denomination recognition process and the authentication determination process with respect to the coins inserted in the coin insertion opening 321 by using the coin recognizing unit 330 to count the number of coins by the denomination of the coins that are determined to be the authentic coins and updates the coin count data 315a based on the result of this counting. The counting processing unit 316a provides a control so that the coins that are determined to be the authentic coins are stored in the storing units 350 or in the mixed denomination storing unit 351. Moreover, the counting processing unit 316a provides a control so that the coin whose denomination could not be recognized and/or a coin that could not be determined as being the authentic coin are transported to the reject unit 347. The counting processing unit 316a registers the coin count data 315a and information about the fee and the like calculated by the fee calculation processing unit 316c in the counting results data 315e as count results information. Moreover, the counting processing unit 316a displays the fee calculated by the fee calculation processing unit 316c on the display unit 310.

The weight calculation processing unit 316b calculates the weight of coins corresponding to the coin count data 315a based on the coin count data 315a and a weight of one coin by the denomination of the coin and stores a result of this calculation in the memory 315 as the coin weight data 315b.

The fee calculation processing unit 316c calculates the amount of the counted coins based on the coin count data 315a, and calculates the premium based on the amount of the coins and the premium table 315d. The fee calculation processing unit 316c calculates the delivery fee based on the delivery fee table 315c and the coin weight data 315b.

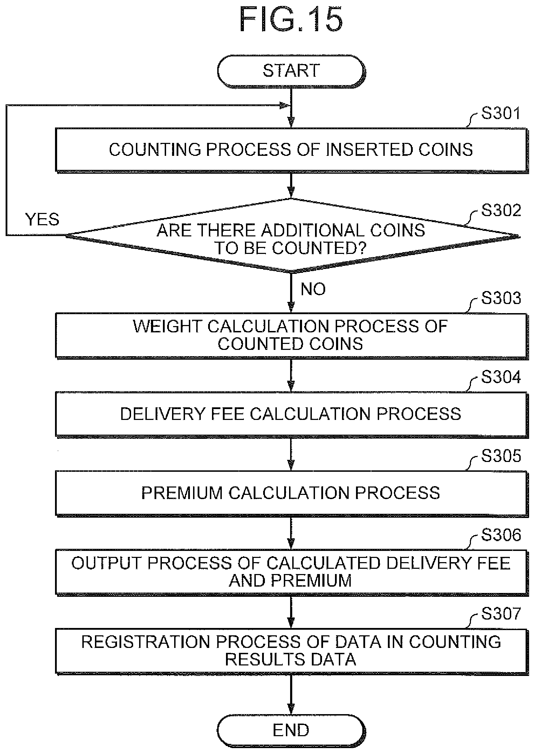

A process procedure for calculating in the coin counting machine 300 according to the second embodiment the fee for delivering coins collected in the shop 1 to the cash center 2 is explained below. FIG. 15 is a flowchart of a process procedure for calculating in the coin counting machine 300 the fee for delivering the coins.

When the counting target coins are inserted in the coin insertion opening 321, the counting processing unit 316a counts the coins and updates the coin count data 315a based on the result of this counting (Step S301). If there are additional coins to be counted (YES: Step S302), the process procedure is returned to Step S301. When there is no additional coin to be counted (NO: Step S302), the weight calculation processing unit 316b calculates the weight of coins corresponding to the coin count data 315a based on the coin count data 315a and a weight of one coin by the denomination of the coin and stores a result of this calculation in the memory 315 as the coin weight data 315b (Step S303).

The fee calculation processing unit 316c calculates the delivery fee by using the coin weight data 315b and the delivery fee table 315c (Step S304). Moreover, the fee calculation processing unit 316c calculates the amount of the counted coins based on the coin count data 315a and calculates the premium by using the amount of the coins and the premium table 315d (Step S305).

The counting processing unit 316a displays on the display unit 310 the calculated fee including the delivery fee and the premium (Step S306). The counting processing unit 316a registers the count results information including the amount of the counted coins, the weight of the counted coins, the delivery fee, the premium, the number of the coins by the denomination of the counted coins, and the like in the counting results data 315e (Step S307), and finishes the process procedure.

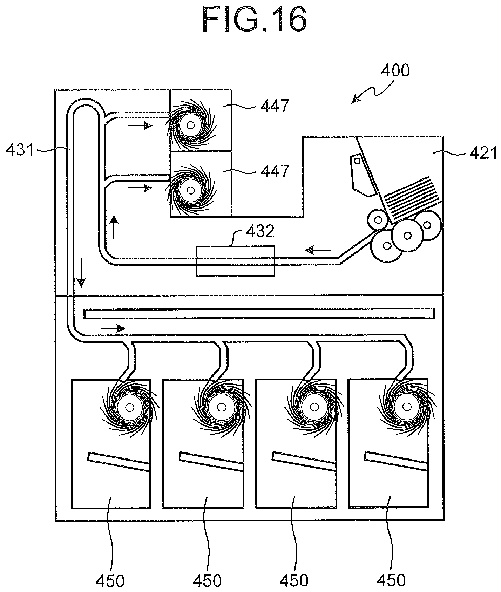

An internal configuration of a banknote counting machine 400 according to the second embodiment is explained below. FIG. 16 is a cross-sectional view of the banknote counting machine 400 when the banknote counting machine 400 is cut in a plane parallel to a side surface thereof.

A banknote receiving inlet 421 is for receiving the banknotes inserted for counting. The banknotes inserted in the banknote receiving inlet 421 are fed one by one to a transport unit 431. A recognition unit 432 is arranged in a transport path of the transport unit 431. The recognition unit 432 is a processing unit that performs denomination recognition and authentication determination of the banknote transported by the transport unit 431. The transport unit 431 transports the banknote to an appropriate one of stacking units 450 and a reject unit 447 based on a denomination recognition result and an authentication determination result obtained in the recognition unit 432.

One stacking unit 450 is arranged corresponding to one denomination. The stacking unit 450 is a unit for storing therein a banknote that is determined by the recognition unit 432 to be the genuine note by the denomination of the banknote. The reject unit 447 is a unit in which a banknote whose denomination could not be recognized by the recognition unit 432 and/or a banknote that could not be determined as being the authentic banknote by the recognition unit 432 is transported.

An internal configuration of the banknote counting machine 400 according to the second embodiment is explained below.

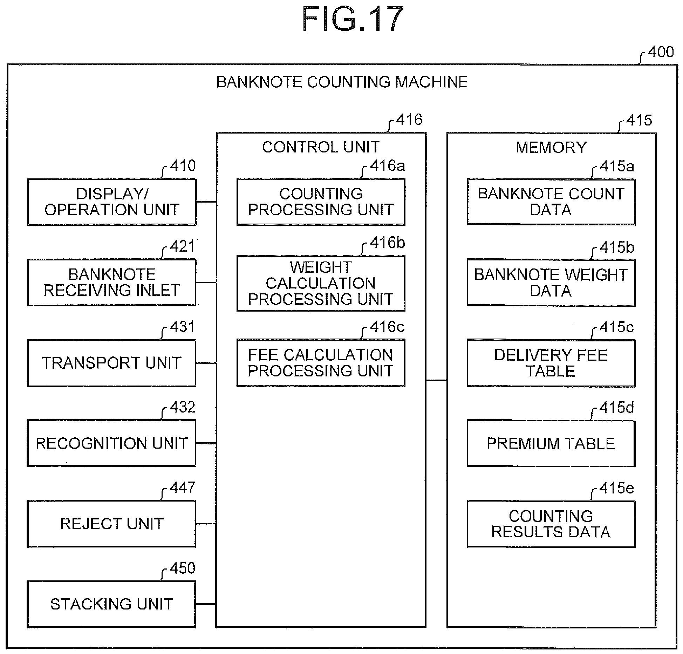

FIG. 17 is a functional block diagram of the internal configuration of the banknote counting machine 400. As shown in FIG. 17, the banknote counting machine 400 includes a display/operation unit 410, the banknote receiving inlet 421, the transport unit 431, the recognition unit 432, the reject unit 447, the stacking units 450, a memory 415, and a control unit 416. The display/operation unit 410 is constituted by a touch panel liquid crystal display and the like and it is used to display information and/or to receive input operations.

The memory 415 is a storage device constituted by a hard disk drive, a nonvolatile memory, and the like. The memory 415 stores therein banknote count data 415a, banknote weight data 415b, a delivery fee table 415c, a premium table 415d, and counting results data 415e.

The banknote count data 415a is data indicating a result of counting obtained by counting the banknotes inserted in the banknote receiving inlet 421. The banknote weight data 415b is data calculated based on the banknote count data 415a and it indicates the weight of the counted banknotes. The delivery fee table 415c is a table used when calculating the delivery fee for delivering the banknotes from the shop 1 to the cash center 2. The premium table 415d is a table used when calculating the premium for delivering the banknotes from the shop 1 to the cash center 2. The counting results data 415e is data indicating a result of counting of the banknotes performed in the banknote counting machine 400. The counting results data 415e contains an amount, a weight, a delivery fee, a premium, and the like of the counted banknotes.

The control unit 416 is a control unit that controls the entire banknote counting machine 400. The control unit 416 includes a counting processing unit 416a, a weight calculation processing unit 416b, and a fee calculation processing unit 416c. As a practical matter, a computer program corresponding to the counting processing unit 416a, the weight calculation processing unit 416b, and the fee calculation processing unit 416c is stored in a not-shown nonvolatile memory and the like. A processing is performed by loading the corresponding computer program in a CPU and executing the computer program.

The counting processing unit 416a performs the denomination recognition process and the authentication determination process with respect to the banknotes inserted from the banknote receiving inlet 421 to count the number of the banknotes by the denomination of the banknotes that are determined to be the authentic banknotes and updates the banknote count data 415a based on the result of this counting. The counting processing unit 416a provides a control to transport the banknotes that are determined to be the authentic banknotes to an appropriate one of the stacking units 450. Moreover, the counting processing unit 416a provides a control to transport to the reject unit 447 a banknote whose denomination could not be recognized and/or a banknote that could not be determined as being the authentic banknote. The counting processing unit 416a registers the banknote count data 415a and information about the fee and the like calculated by the fee calculation processing unit 416c in the counting results data 415e as count results information. Moreover, the counting processing unit 416a displays the fee calculated by the fee calculation processing unit 416c on the display/operation unit 410.

The weight calculation processing unit 416b calculates the weight of banknotes corresponding to the banknote count data 415a based on the banknote count data 415a and a weight of one banknote by the denomination of the banknote and stores a result of this calculation in the memory 415 as the banknote weight data 415b.

The fee calculation processing unit 416c calculates the amount of the counted banknotes based on the banknote count data 415a, and calculates the premium based on the amount of the banknotes and the premium table 415d. The fee calculation processing unit 416c calculates the delivery fee based on the delivery fee table 415c and the banknote weight data 415b.

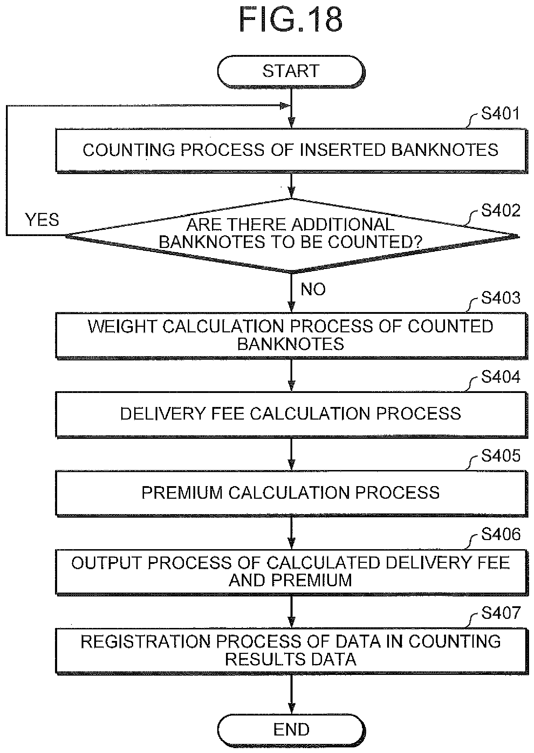

A process procedure for calculating the fee for delivering banknotes collected in the shop 1 to the cash center 2 in the banknote counting machine 400 according to the second embodiment is explained below. FIG. 18 is a flowchart of the process procedure for calculating the fee for transporting the banknotes in the banknote counting machine 400.

When the banknotes are inserted in the banknote receiving inlet 421, the counting processing unit 416a counts the banknotes and updates the banknote count data 415a based on the result of this counting (Step S401). If there are additional banknotes to be counted (YES: Step S402), the process procedure is returned to Step S401. When there is no additional banknote to be counted (NO: Step S402), the weight calculation processing unit 416b calculates the weight of banknotes corresponding to the banknote count data 415a based on the banknote count data 415a and a weight of one banknote by the denomination of the banknote and stores a result of this calculation in the memory 415 as the banknote weight data 415b (Step S403) .

The fee calculation processing unit 416c calculates the delivery fee by using the delivery fee table 415c and the banknote weight data 415b (Step S404) . The fee calculation processing unit 416c calculates the amount of the counted banknotes based on the banknote count data 415a, and calculates the premium by using the amount of the banknotes and the premium table 415d (Step S405).

The counting processing unit 416a displays on the display/operation unit 410 the calculated fee including the delivery fee and the premium (Step S406) . The counting processing unit 416a registers the result of the counting including the amount of the counted banknotes, the weight of the counted banknotes, the delivery fee, the premium, the number of the banknotes by the denomination of the counted banknotes, and the like in the counting results data 415e (Step S407), and finishes the process procedure.

As has been explained above, in the second embodiment, the number of the money by the denomination of the money delivered to the cash center 2 is counted, the weight of the delivered money is calculated based on the number of the money by the denomination of the money and a weight of one money by the denomination of the money, the premium is calculated based on the amount of the money corresponding to the number of the money by the denomination of the money, the delivery fee is calculated based on the weight of the money, and the fee is calculated based on the delivery fee and the premium. With this configuration, the fee that is appropriate for the labor involved in the delivery of the money handled by the person in charge of the secure transportation company can be calculated appropriately and efficiently.

Note that, in the second embodiment, the explanation has been given assuming that the coin counting machine 300 and the banknote counting machine 400 are separate devices; however, the present invention is not limited to this configuration. For example, the coin counting machine 300 and the banknote counting machine 400 can be integrated in one device and the premium can be calculated based on the total amount of the counted coins and banknotes and the delivery fee can be calculated based on the total weight of the counted coins and banknotes. In another configuration in which the coin counting machine 300 and the banknote counting machine 400 are separate devices, for example, the banknote counting machine 400 can be notified of the amount and weight of the coins counted in the coin counting machine 300, and in the banknote counting machine 400, the premium can be calculated based on the total amount of the coins and banknotes and the delivery fee can be calculated based on the total weight of the coins and banknotes. Moreover, the coin counting machine 300 can be notified of the amount and weight of the banknotes counted in the banknote counting machine 400. In another configuration, a management apparatus can be arranged in addition to the coin counting machine 300 and the banknote counting machine 400, the management apparatus can be notified of the amount and weight of the counted coins from the coin counting machine 300, the management apparatus can be notified of the amount and weight of the counted banknotes from the banknote counting machine 400, and in the management apparatus, the premium can be calculated based on the total amount of the coins and banknotes and the delivery fee can be calculated based on the total weight of the coins and banknotes.

### THIRD EMBODIMENT

In the first embodiment and the second embodiment, examples have been explained in which the delivery fee and the premium are calculated for collecting the proceeds of sales from the shop 1 to the cash center 2. However, the money is transported between the shop 1 and the cash center 2 not only for the collection of the proceeds of sales. For example, when the cash center 2 receives from the shop 1 a request for delivering change fund, the cash center 2 asks the secure transportation company to transport the change fund to the shop 1. In a third embodiment, an example is explained in which the fee and the premium are calculated for delivering the change fund.

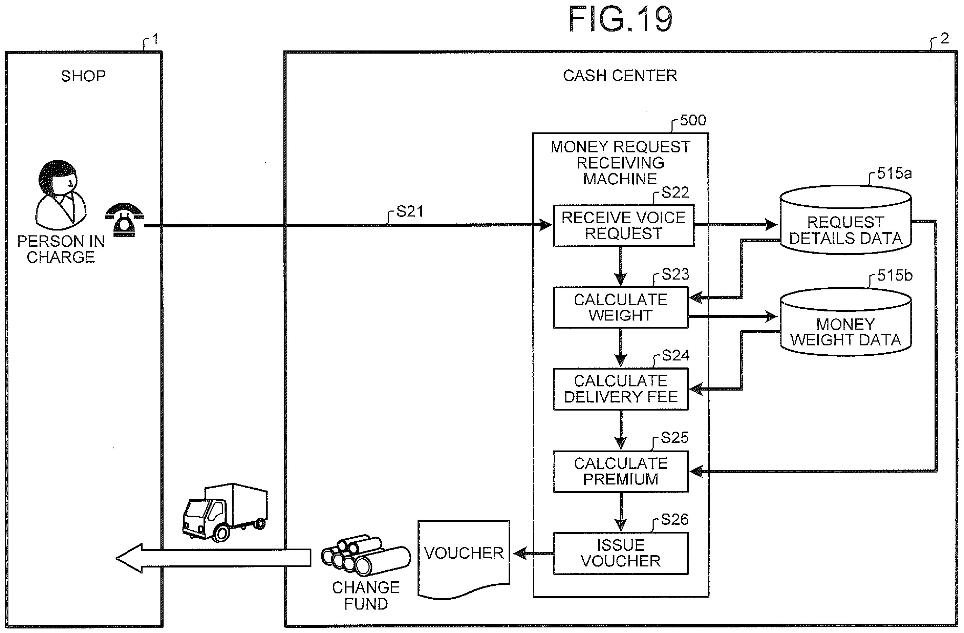

To begin with, a concept of a process procedure for calculating in a money request receiving machine 500 installed in the cash center 2 according to the third embodiment a fee for delivering the change fund is explained. FIG. 19 is a view for explaining the concept of the process procedure for calculating in the money request receiving machine 500 installed in the cash center 2 the fee for delivering the change fund.

A person in charge of the shop 1 who is responsible for placing an order for arranging the change fund makes a telephone call to a predetermined phone number corresponding to the money request receiving machine 500 of the cash center 2 by using a telephone and makes a request for the change fund in accordance with a voice guidance (Step S21). The money request receiving machine 500 receives the voice request for the delivery of the change fund from the telephone and stores the contents of the request in a memory as request details data 515a (Step S22). The money request receiving machine 500 calculates a weight of the change fund to be delivered based on the request details data 515a and stores a result of this calculation in the memory as money weight data 515b (Step S23).

The money request receiving machine 500 calculates a delivery fee based on the money weight data 515b (Step S24) and calculates a premium based on an amount of the change fund calculated based on the request details data 515a (Step S25). The money request receiving machine 500 issues a voucher that contains the calculated fee including the delivery fee and the premium and the contents of the request details data 515a (Step S26).

A person in charge of the cash center 2 prepares the change fund according to the received request based on the voucher and hands over the prepared change fund to the person in charge of the secure transportation company. The person in charge of the secure transportation company who received the change fund transports the same to the shop 1.

In this manner, the weight of the ordered change fund is calculated based on the number of the change fund for which the order has been received and the weight of one money, the delivery fee is calculated based on the weight, and the premium is calculated based on the amount of the change fund calculated by using the number of the change fund for which the order has been received, and the fee is calculated based on the delivery fee and the premium. With this configuration, the fee that is appropriate for the labor involved in the delivery of the money by the person in charge of the secure transportation company and the like can be calculated appropriately and efficiently.

An internal configuration of the money request receiving machine 500 according to the third embodiment is explained below.

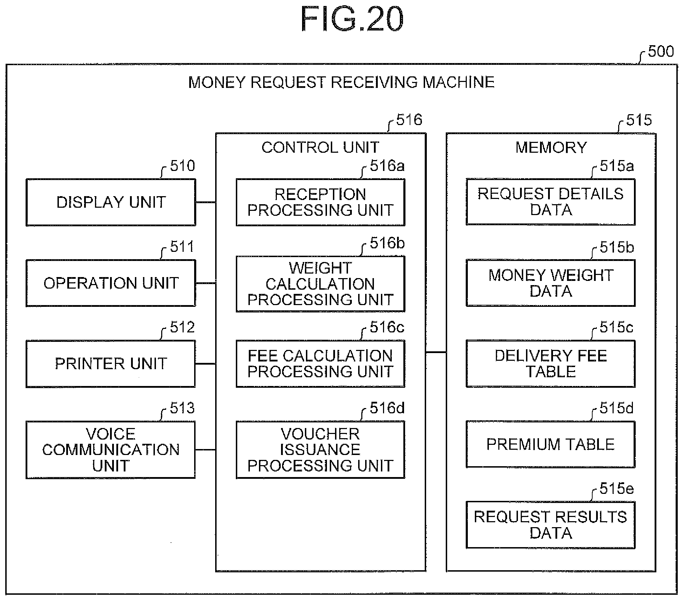

FIG. 20 is a functional block diagram of the internal configuration of the money request receiving machine 500. As shown in FIG. 20, the money request receiving machine 500 includes a display unit 510, an operation unit 511, a printer unit 512, a voice communication unit 513, a memory 515, and a control unit 516.

The display unit 510 is a display device such as a liquid crystal display. The operation unit 511 is an input device such as a keyboard, a mouse, and the like. The printer unit 512 is an output unit for printing the voucher and the like including the contents of the requested change fund. The voice communication unit 513 is an interface unit for performing voice communication with a voice communication terminal such as a telephone.

The memory 515 is a storage device constituted by a hard disk drive, a nonvolatile memory, and the like. The memory 515 stores therein the request details data 515a, the money weight data 515b, a delivery fee table 515c, a premium table 515d, and request results data 515e.

The request details data 515a is data about the delivery request for the change fund received from the shop. The money weight data 515b is data indicating the weight of the change fund corresponding to the request details data 515a. The delivery fee table 515c is a table for calculating the delivery fee for delivering the change fund from the cash center 2 to the shop 1. The premium table 515d is a table for calculating the premium for delivering the change fund from the cash center 2 to the shop 1. The request results data 515e is data that contains request results of the change fund received by the money request receiving machine 500. The request results include the requested number and weight, the delivery fee and the premium, and the like of the change fund for each of the received request.

The control unit 516 is a control unit that controls the entire the money request receiving machine 500. The control unit 516 includes a reception processing unit 516a, a weight calculation processing unit 516b, a fee calculation processing unit 516c, and a voucher issuance processing unit 516d. As a practical matter, a computer program corresponding to the reception processing unit 516a, the weight calculation processing unit 516b, the fee calculation processing unit 516c and the voucher issuance processing unit 516d is stored in a not-shown nonvolatile memory and the like. A processing is performed by loading the corresponding computer program in a CPU and executing the computer program.

The reception processing unit 516a receives the delivery request for the change fund by the voice via the voice communication unit 513 and stores the received contents in the memory 515 as the request details data 515a. Moreover, the reception processing unit 516a registers the request details data 515a and the fee calculated by the fee calculation processing unit 516c in the request results data 515e.

The weight calculation processing unit 516b calculates the weight of the change fund corresponding to the requested number of the money based on the request details data 515a and the weight of one money by the denomination of the money and stores a result of this calculation in the memory 515 as the money weight data 515b.

The fee calculation processing unit 516c calculates the amount of the change fund corresponding to the number in the received request based on the request details data 515a and calculates the premium by using the calculated amount of the change fund and the premium table 515d. Moreover, the fee calculation processing unit 516c calculates the delivery fee by using the money weight data 515b and the delivery fee table 515c.

The voucher issuance processing unit 516d causes the printer unit 512 to issue the voucher containing information and the like including the contents of the requested change fund and stored in the request details data 515a, the fee calculated by using the fee calculation processing unit 516c, and the like.

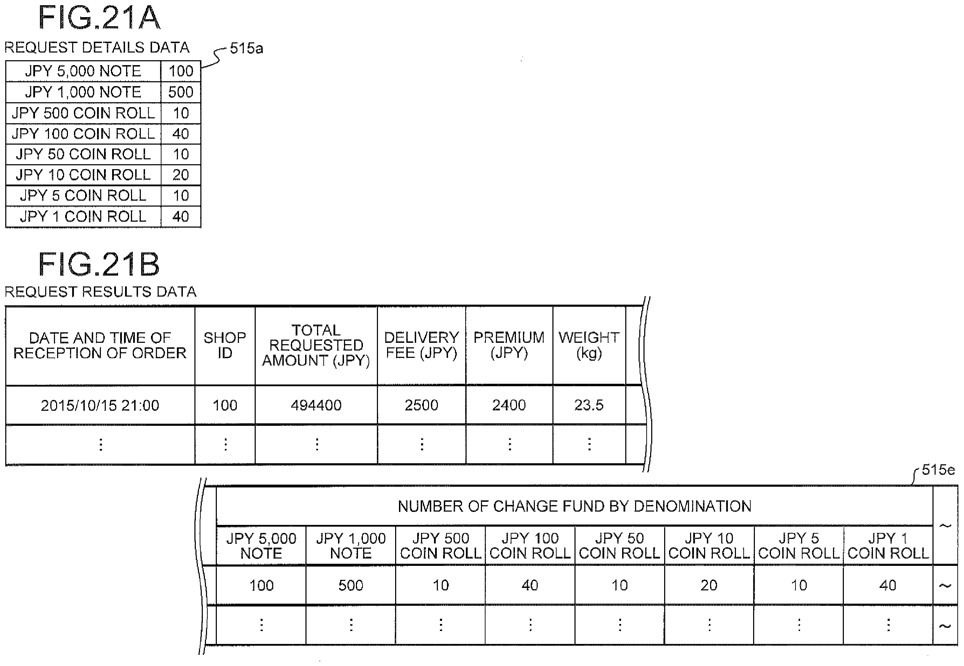

An example of data stored in the memory 515 of the money request receiving machine 500 according to the third embodiment is explained below. FIGS. 21A and 21B are views for explaining an example of the data stored in the memory 515 of the money request receiving machine 500.

The request details data 515a shown in FIG. 21A includes the number of JPY 5,000 notes, the number of JPY 1,000 notes, the number of JPY 500 coin rolls, the number of JPY 100 coin rolls, the number of JPY 50 coin rolls, the number of JPY 10 coin rolls, the number of JPY 5 coin rolls, and the number of JPY 1 coin rolls. In this example, the received request for the change fund contains 100 JPY 5,000 notes, 500 JPY 1,000 notes, 10 coin rolls of JPY 500 coins, 40 coin rolls of JPY 100 coins, 10 coin rolls of JPY 50 coins, 20 coin rolls of JPY 10 coins, 10 coin rolls of JPY 5 coins, and 40 coin rolls of JPY 1 coins.

The request results data 515e shown in FIG. 21B is data in which a shop ID, a total requested amount, a delivery fee, a premium, a weight of the delivered change fund, and number of change fund by the denomination of the change fund, which is the details of the change fund, are mapped with a date and time of reception of the order . The total requested amount is a sum of the amount of the change fund corresponding to the requested number, the delivery fee, and the premium.

The example shown in FIG. 21B shows that the request results data 515e is mapped with "2015/10/15 21:00" as the date and time of reception of the request. Moreover, the shop ID is 100, the total requested amount is JPY 494,400, the delivery fee is JPY 2,500, the premium is JPY 2,400, and the weight of the change fund for which the request is received is 23.5 kg. Moreover, the change fund contains 100 JPY 5,000 notes, 500 JPY 1,000 notes, 10 coin rolls of JPY 500 coins, 40 coin rolls of JPY 100 coins, 10 coin rolls of JPY 50 coins, 20 coin rolls of JPY 10 coins, 10 coin rolls of JPY 5 coins, and 40 coin rolls of JPY 1 coins.

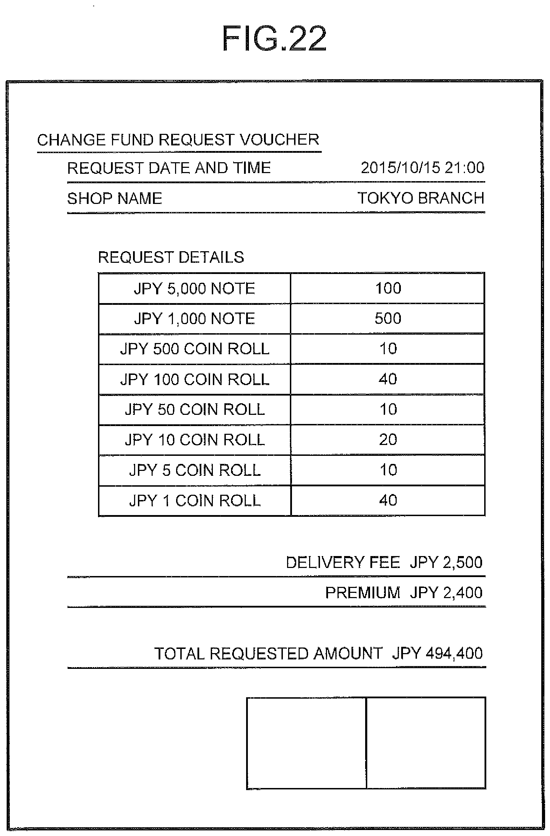

Contents of the voucher relating to the request for the change fund issued by the money request receiving machine 500 according to the third embodiment is explained below. FIG. 22 is a view for explaining the contents of the voucher relating to the request for the change fund issued by the money request receiving machine 500. FIG. 22 is an example of the voucher issued based on the request results data 515e shown in FIG. 21B.

As shown in FIG. 22, "change fund request voucher" indicating that the voucher relates to the request for the change fund is printed on the voucher. Moreover, a requester shop name and the request date and time are printed on the voucher as recognition information of the voucher. Moreover, the number by the denomination of the change fund, and the delivery fee, the premium, and the total requested amount calculated based on the request are printed on the voucher.

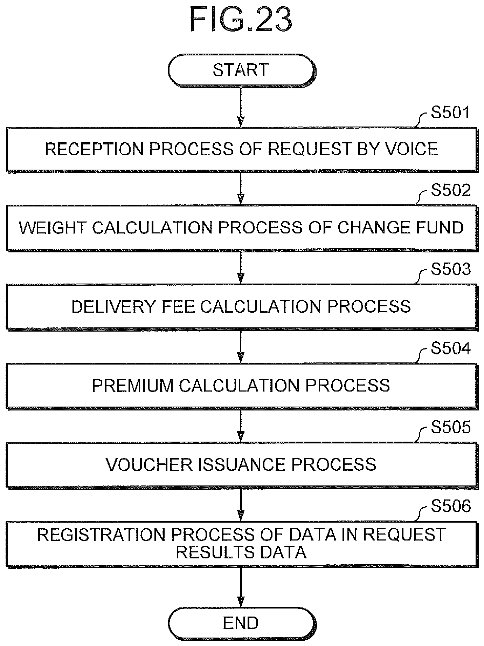

A process procedure for calculating in the money request receiving machine 500 according to the third embodiment a fee for delivering the change fund is explained below. FIG. 23 is a flowchart of the process procedure for calculating the fee for delivering the change fund in the money request receiving machine 500.

Upon receiving the delivery request for the change fund by the voice via the voice communication unit 513, the reception processing unit 516a stores the received contents in the memory 515 as the request details data 515a (Step S501) . The weight calculation processing unit 516b calculates the weight of the change fund corresponding to the requested number of the money based on the request details data 515a and the weight of one money by the denomination of the money and stores a result of this calculation in the memory 515 as the money weight data 515b (Step S502).

The fee calculation processing unit 516c calculates the delivery fee by using the delivery fee table 515c and the money weight data 515b (Step S503). Moreover, the fee calculation processing unit 516c calculates the amount of the change fund based on the request details data 515a and calculates the premium by using the calculated amount of the change fund and the premium table 515d (Step S504).

The voucher issuance processing unit 516d causes the printer unit 512 to issue a voucher containing the number of the requested change fund by the denomination, the delivery fee, and the premium (Step S505). The reception processing unit 516a registers request results information including the total requested amount, the weight of the change fund, the delivery fee, the premium, the number of the requested change fund by the denomination of the change fund, and the like in the request results data 515e (Step S506), and finishes the process procedure.

As has been explained above, in the third embodiment, upon receiving the request for delivering the change fund from the shop 1, the weight of the change fund corresponding to the request is calculated based on the number of the requested change fund by the denomination of the change fund and the weight of one money by the denomination of the money, the delivery fee is calculated based on the weight of the change fund, the premium is calculated based on the amount of the change fund, and the fee is calculated based on the delivery fee and the premium. With this configuration, the fee that is appropriate for the labor involved in the delivery of the money by the person in charge of the secure transportation company and the like can be calculated appropriately and efficiently.

### FOURTH EMBODIMENT

In the third embodiment, an example is explained in which the fee and the premium are calculated for delivering the change fund from the cash center 2 to the shop 1. However, apart from the change fund, miscellaneous goods such as wrapper bands for bundling the banknotes and wrapping papers for wrapping coins of a predetermined number are also handled in the cash center 2. Accordingly, an order for the wrapper bands and/or the wrapping papers can also be received in the cash center 2 along with the request for delivering the change fund. Moreover, when actually delivering the change fund, the wrapper bands, and the wrapping papers, the size and the number of the bags used in the delivery are determined based on the quantity of the material to be delivered. In the fourth embodiment, an example is explained in which the fee and the premium are calculated for handling the wrapper bands and the wrapping papers apart from the change fund in the cash center 2, and the size and the number of the bags used in the delivery are determined.

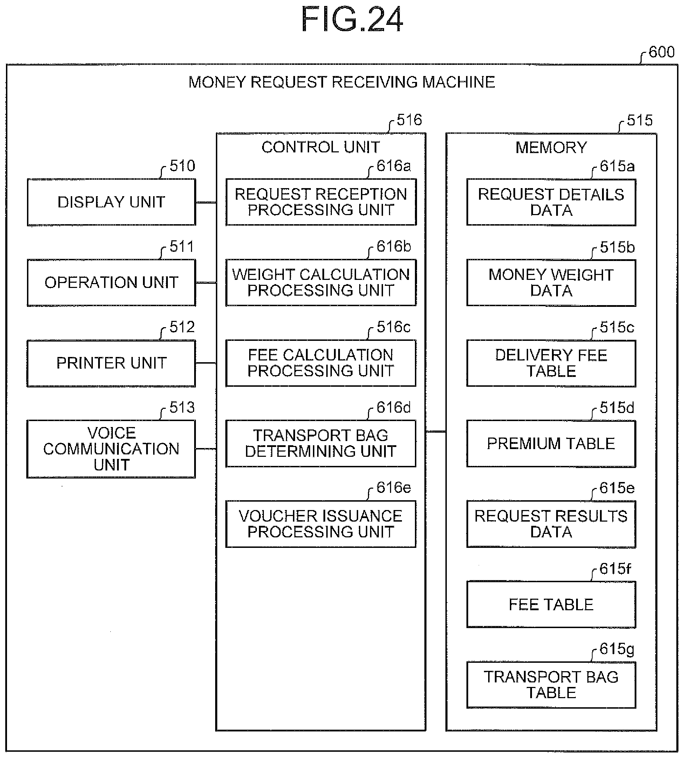

To begin with, an internal configuration of a money request receiving machine 600 according to the fourth embodiment is explained below. FIG. 24 is a functional block diagram of the internal configuration of the money request receiving machine 600. In the block diagram of the money request receiving machine 600 shown in FIG. 24, the same reference numbers are given to the structural components that are the same as those of the money request receiving machine 500 according to the third embodiment, and unique reference numbers are given to the structural components that are different from those of the money request receiving machine 500. Moreover, in the explanation of the configuration of the money request receiving machine 600, an explanation will be omitted of the structural components that are the same as those of the money request receiving machine 500 according to the third embodiment, and an explanation will be given mainly of the structural components that are different from those of the money request receiving machine 500.

As shown in FIG. 24, when the money request receiving machine 600 according to the fourth embodiment is compared with the money request receiving machine 500 according to the third embodiment, request details data 615a and request results data 615e stored in the memory 515 are different from the request details data 515a and the request results data 515e of the third embodiment. Moreover, a fee table 615f and a transport bag table 615g are added to the data to be stored in the memory 515 of the money request receiving machine 600 according to the fourth embodiment.

In the fourth embodiment, the wrapper bands for bundling the banknotes and the wrapping paper for wrapping the coins can be ordered when requesting the delivery of the change fund. The request details data 615a contains contents of the order for the wrapper bands and the wrapping papers. The request results data 615e also contains information relating to the order for the wrapper bands and the wrapping papers. The fee table 615f contains information about a price and a weight per order of the wrapper bands and the wrapping papers.

The fourth embodiment further includes a function for determining and outputting a type and number of bags to be used for transporting depending on the order of the change fund or a function for determining and outputting a type and number of bags to be used for transporting depending on the order of the change fund, the wrapper band, and the wrapping paper. Therefore, in the fourth embodiment, the transport bag table 615g is additionally provided as data that contains a mapping of the weight of the change fund and the type and the number of the bags to be used for transporting or data that contains a mapping of the weight of the change fund, the wrapper band, and the wrapping paper and the type and the number of the bags to be used for transporting.

When the money request receiving machine 600 according to the fourth embodiment is compared with the money request receiving machine 500 according to the third embodiment, a request reception processing unit 616a, a weight calculation processing unit 616b, and a voucher issuance processing unit 616e of the control unit 516 are different from the reception processing unit 516a, the weight calculation processing unit 516b, and the voucher issuance processing unit 516d according to the third embodiment. Moreover, a transport bag determining unit 616d is added to the control unit 516 of the money request receiving machine 600 according to the fourth embodiment.

The request reception processing unit 616a is different from the reception processing unit 516a according to the third embodiment in that the request reception processing unit 616a can receive the order for the wrapper bands and the wrapping papers apart from the request for the delivery of the change fund. Accordingly, the request reception processing unit 616a also registers in the request details data 615a number of the wrapper bands and the wrapping papers for which the order has been received. Moreover, the request reception processing unit 616a also registers in the request results data 615e information relating to the order for the wrapper bands and the wrapping papers and information relating to the type and the number of the bags to be used for transporting determined by the transport bag determining unit 616d.

The weight calculation processing unit 616b calculates the weight of the change fund, the total weight of the wrapper bands and the wrapping papers and stores a result of this calculation in the memory 515 as the money weight data 515b. The transport bag determining unit 616d determines the type and the number of the bags to be used for transporting by using the money weight data 515b and the transport bag table 615g. The contents of the voucher output by the voucher issuance processing unit 616e is also different from the contents output on the voucher of the third embodiment. The voucher issuance processing unit 616e additionally outputs on the voucher information relating to the wrapper bands and the wrapping papers, and information relating to the type and the number of the bags to be used for transporting determined by the transport bag determining unit 616d.

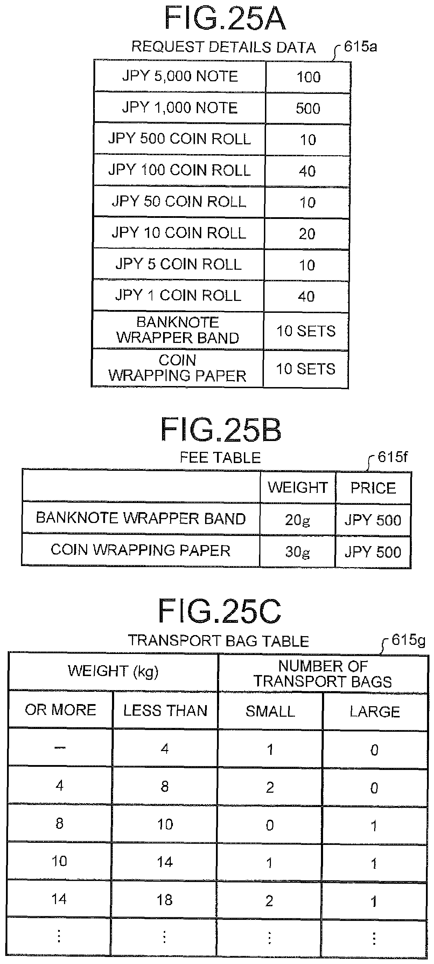

An example of data stored in the memory 515 of the money request receiving machine 600 according to the fourth embodiment is explained below. FIGS. 25A to 26 are views for explaining an example of the data stored in the memory 515 of the money request receiving machine 600.

The request details data 615a shown in FIG. 25A is data including the number of JPY 5,000 notes, the number of JPY 1,000 notes, and the number of coin rolls by the denomination of the coins that is information relating to the requested number by the denomination of the change fund, and number of sets of the wrapper bands for bundling the banknotes, and number of sets of the wrapping papers for wrapping the coins that is information relating to the contents of the order for the miscellaneous goods. In this example, the requested number by the denomination of the change fund is 100 JPY 5,000 notes, 500 JPY 1,000 notes, 10 coin rolls of JPY 500 coins, 40 coin rolls of JPY 100 coins, 10 coin rolls of JPY 50 coins, 20 coin rolls of JPY 10 coins, 10 coin rolls of JPY 5 coins, and 40 coin rolls of JPY 1 coins. Moreover, the contents of the order for the miscellaneous goods is 10 sets of the wrapper bands for bundling the banknotes and 10 sets of the wrapping papers for wrapping the coins.

The fee table 615f shown in FIG. 25B includes a weight and a price of one set of the wrapper bands for bundling the banknotes and a weight and a price of one set of the wrapping papers for wrapping the coins. In this example, the weight and the price of one set of the wrapper bands for bundling the banknotes is 20 g and JPY 500 respectively. Moreover, the weight and the price of one set of the wrapping papers for wrapping the coins is 30 g and JPY 500 respectively.

The transport bag table 615g shown in FIG. 25C is data in which weight ranges of the change fund and the like to be transported and number of the bags for transport per type are mapped with each other. In this example, a weight less than 4 kg is mapped with one small bag, a weight equal to or more than 4 kg and less than 8 kg is mapped with two small bags, a weight equal to or more than 8 kg and less than 10 kg is mapped with one large bag, a weight equal to or more than 10 kg and less than 14 kg is mapped with one small bag and one large bag, and a weight equal to or more than 14 kg and less than 18 kg is mapped with two small bags and one large bag.

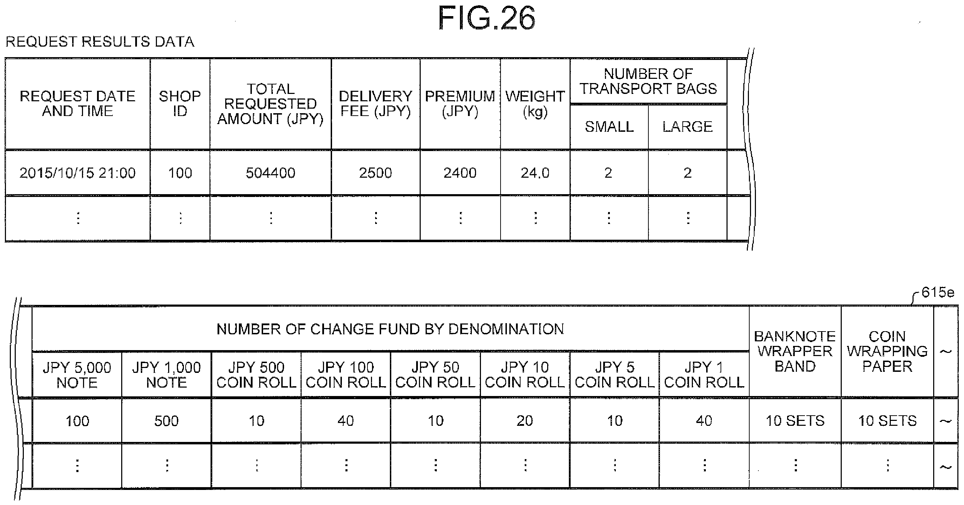

The request results data 615e shown in FIG. 26 is data in which a shop ID, a total requested amount, a delivery fee, a premium, a weight of the change fund and the miscellaneous goods, number of the bags for transport per type and number of change fund by the denomination of the change fund, number of sets of the wrapper bands for bundling the banknotes, and number of sets of the wrapping papers for wrapping the coins are mapped with a date and time of reception of the order.

The example shown in FIG. 26 shows that the request results data 615e is mapped with "2015/10/15 21:00" as the date and time of reception of the request. In this example, the shop ID is 100, the total requested amount is JPY 504,400, the delivery fee is JPY 2,500, the premium is JPY 2,400, and the weight of the change fund and the miscellaneous goods for which the request is received is 24.0 kg. Moreover, based on the received request, it is determined that two small bags and two large bags are required as the bags for transport. Moreover, the number by the denomination of the change fund is 100 JPY 5,000 notes, 500 JPY 1,000 notes, 10 coin rolls of JPY 500 coins, 40 coin rolls of JPY 100 coins, 10 coin rolls of JPY 50 coins, 20 coin rolls of JPY 10 coins, 10 coin rolls of JPY 5 coins, and 40 coin rolls of JPY 1 coins. Moreover, 10 sets of the wrapper bands and 10 sets of the wrapping papers have been ordered.

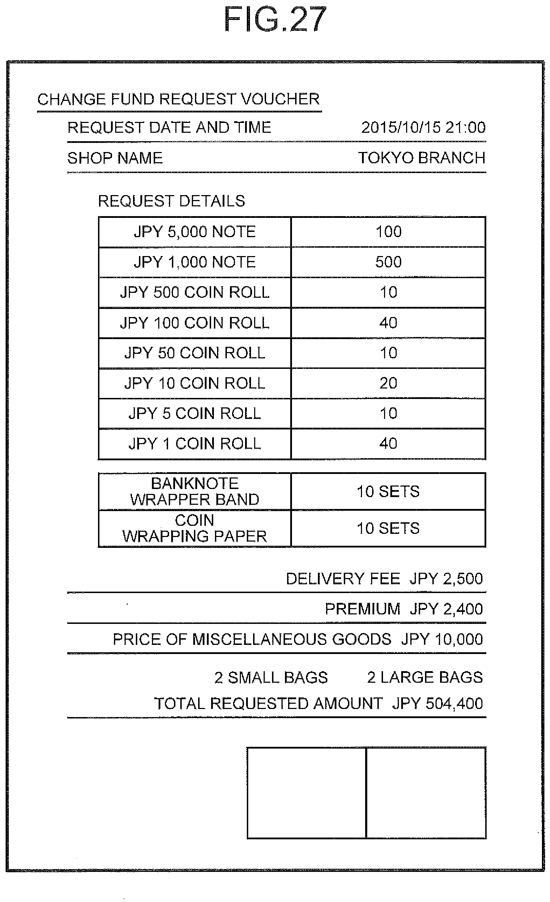

Contents of the voucher relating to the request for the change fund issued by the money request receiving machine 600 according to the fourth embodiment is explained below. FIG. 27 is a view for explaining the contents of the voucher relating to the request for the change fund issued by the money request receiving machine 600. The voucher shown in FIG. 27 relating to the request of the change fund is explained mainly by explaining the difference thereof with the voucher according to the third embodiment shown FIG. 22.

As shown in FIG. 27, in an area where details of the request contents are mentioned, the ordered number of the wrapper bands for bundling the banknotes and the ordered number of the wrapping papers for wrapping the coins that represent the contents of the order for the miscellaneous goods are output. Moreover, the price of the miscellaneous goods, that is, the wrapper bands and the wrapping papers, is also output along with the delivery fee and the premium. Moreover, the type and the number of bags to be used for transporting the requested change fund and the miscellaneous goods are also output.

As has been explained above, in the fourth embodiment, when transporting the various miscellaneous goods along with the delivery of the change fund, the delivery fee is calculated based on the total weight of the change fund and the miscellaneous goods to be delivered. With this configuration, the fee that is appropriate for the labor involved in the delivery of the money by the person in charge of the secure transportation company and the like can be calculated appropriately and efficiently.

### FIFTH EMBODIMENT

In the first embodiment to the fourth embodiment, examples have been explained in which the fee and the premium are calculated each time the money and the like is transported between the shop 1 and the cash center 2. However, the present invention is not limited to this. For example, the fee and the premium can be calculated depending on a quantity of the money and the like to be delivered within a predetermined period. In the fifth embodiment, an example is explained in which a fee and a premium for delivering the proceeds of sales of one month are calculated according to a total delivered quantity of the proceeds of sales for one month.

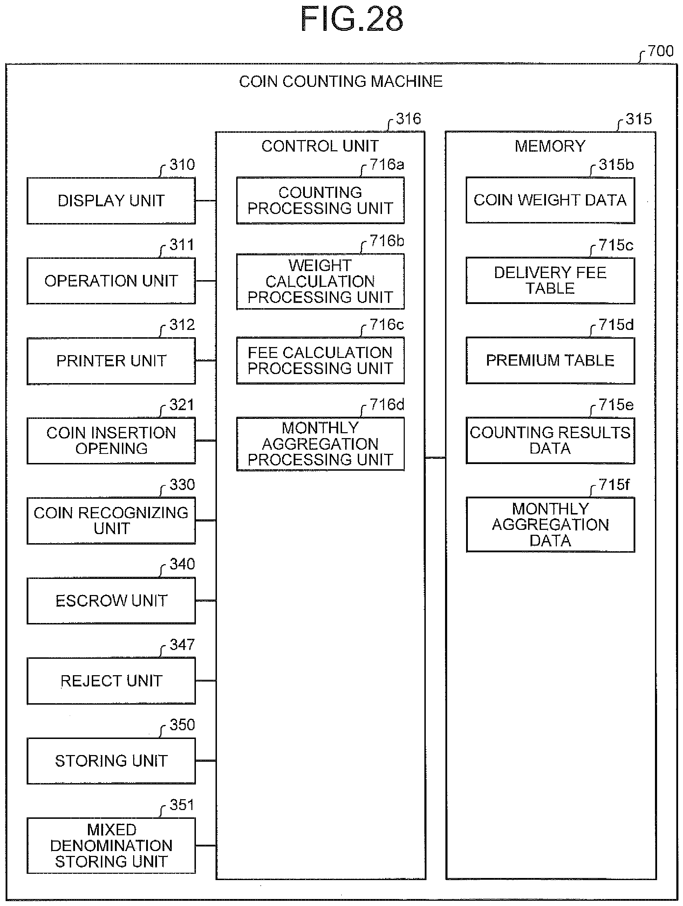

To begin with, an internal configuration of a coin counting machine 700 according to the fifth embodiment is explained below. FIG. 28 is a functional block diagram of the internal configuration of the coin counting machine 700. In the block diagram of the coin counting machine 700 shown in FIG. 28, the same reference numbers are given to the structural components that are the same as those of the coin counting machine 300 according to the second embodiment, and unique reference numbers are given to the structural components that are different from those of the coin counting machine 300. Moreover, in the explanation of the configuration of the coin counting machine 700, an explanation will be omitted of the structural components that are the same as those of the coin counting machine 300 according to the second embodiment, and an explanation will be given mainly of the structural components that are different from those of the coin counting machine 300.

As shown in FIG. 28, when the coin counting machine 700 according to the fifth embodiment is compared with the coin counting machine 300 according to the second embodiment, a delivery fee table 715c, a premium table 715d, and counting results data 715e stored in the memory 315 are different from the delivery fee table 315c, the premium table 315d, the counting results data 315e according to the second embodiment. Moreover, the coin count data 315a that is stored in the memory 315 according to the second embodiment is not stored in the memory 315 according to the fifth embodiment. Moreover, monthly aggregation data 715f, which is not stored in the memory 315 according to the second embodiment, is additionally stored in the memory 315 according to the fifth embodiment.

A data structure of the delivery fee table 715c and the premium table 715d according to the fifth embodiment is the same as a data structure of the delivery fee table 315c and the premium table 315d according to the second embodiment, respectively. However, the difference between the second embodiment is that the fee table according to the fifth embodiment contains the delivery fee and the premium corresponding to the quantity of the delivered money within a period of one month.

In the second embodiment, because the fee is calculated each time the delivered money is counted, the counting results data 315e contained the fee calculated each time the money is counted. In contrast, in the fifth embodiment, because the calculation of the fee is performed monthly, the counting results data 715e does not contain the information about the fee. Moreover, in the fifth embodiment, because the fee is calculated monthly, the monthly aggregation data 715f that is the result obtained by aggregating the number of the money counted for one month is prepared. The monthly aggregation data 715f also contains, along with the result of aggregation obtained by counting the number the money for one month, the fee calculated based on the result of the aggregation.

When the coin counting machine 700 according to the fifth embodiment is compared with the coin counting machine 300 according to the second embodiment, a counting processing unit 716a, a weight calculation processing unit 716b, and a fee calculation processing unit 716c of the control unit 316 are different from the counting processing unit 316a, the weight calculation processing unit 316b, and the fee calculation processing unit 316c according to the second embodiment. Moreover, a monthly aggregation processing unit 716d, which is not included in the control unit 316 according to the second embodiment, is additionally included in the control unit 316 of the coin counting machine 700 according to the fifth embodiment. The fifth embodiment is explained below mainly by explaining the difference thereof with the second embodiment.

The counting processing unit 716a registers a result of counting in the counting results data 715e. However, because the fee is not calculated each time the counting is performed, the counting results data 715e does not contain the fee. Moreover, because the fee is not calculated each time the counting is performed, the counting processing unit 716a does not also perform the processing to display on the display unit 310 the fee corresponding to the result of the counting.

The weight calculation processing unit 716b is a processing unit that calculates a weight of the coins delivered within one month. The weight calculation processing unit 716b calculates a weight of the coins delivered within one month and stores the calculated weight as the coin weight data 315b in the memory 315. The weight of the coins delivered within one month is calculated based on the monthly aggregation data 715f, which is the result of the aggregation of the number of the coins delivered within one month, and the weight of one coin by the denomination of the coin.

The fee calculation processing unit 716c calculates an amount of the coins corresponding to the number of the coins delivered within one month output to the monthly aggregation data 715f, and calculates a monthly premium by using this amount and the premium table 715d. Moreover, the fee calculation processing unit 716c calculates a monthly delivery fee by using the coin weight data 315b and the delivery fee table 715c.

The monthly aggregation processing unit 716d aggregates the result of the counting for one month contained in the counting results data 715e and adds this result of the aggregation in the monthly aggregation data 715f. Moreover, the monthly aggregation processing unit 716d outputs the weight of the coins delivered within one month calculated by the weight calculation processing unit 716b and the premium and delivery fee calculated by the fee calculation processing unit 716c to a corresponding record of the monthly aggregation data 715f.

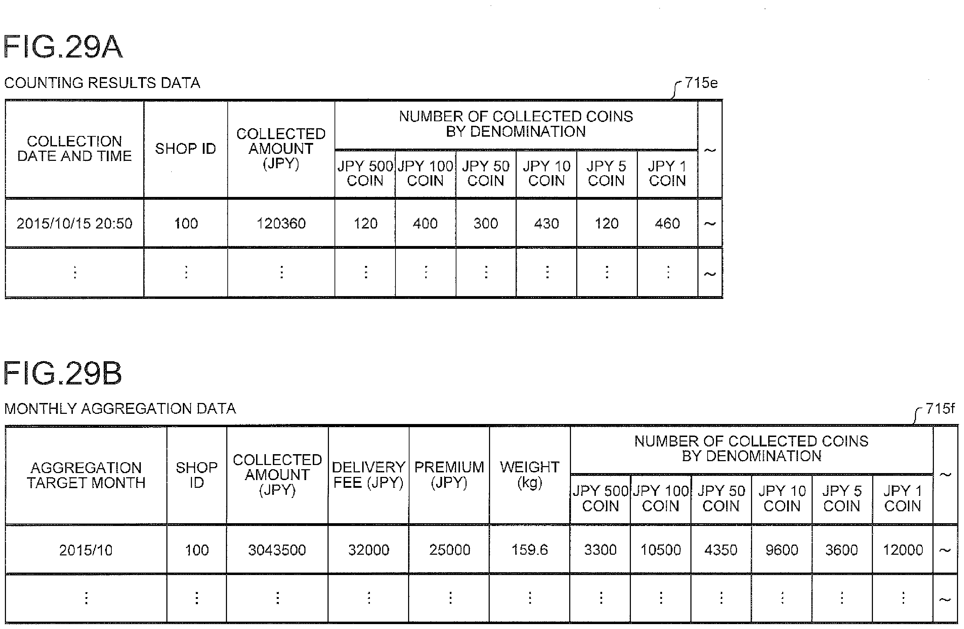

An example of data stored in the memory 315 of the coin counting machine 700 according to the fifth embodiment is explained below. FIGS. 29A and 29B are views for explaining an example of the data stored in the memory 315 of the coin counting machine 700 according to the fifth embodiment.

As shown in FIG. 29A, the counting results data 715e is data in which a shop ID, a collected amount, number of the collected coins by the denomination of the coins, and the like are mapped with a date and time on which the coins are collected. The counting results data 715e does not contain the fee, the premium, and the weight.

The monthly aggregation data 715f shown in FIG. 29B is data in which the shop ID, the collected amount, the delivery fee, the premium, the weight of the delivered coins, and the number of the collected coins by the denomination of the coins are mapped with the aggregation target month. In this example, the monthly aggregation data 715f in which the aggregation target month is mapped with "2015/10" has been shown. Moreover, in this monthly aggregation data 715f, the shop ID is 100, the collected amount is JPY 3,043,500, the delivery fee is JPY 32,000, the premium is JPY 25,000, and the weight of the delivered money is 159.6 kg. Moreover, regarding the number of the collected coins by the denomination of the coins, 3300 JPY 500 coins, 10500 JPY 100 coins, 4350 JPY 50 coins, 9600 JPY 10 coins, 3600 JPY 5 coins, and 12000 JPY 1 coins are present.

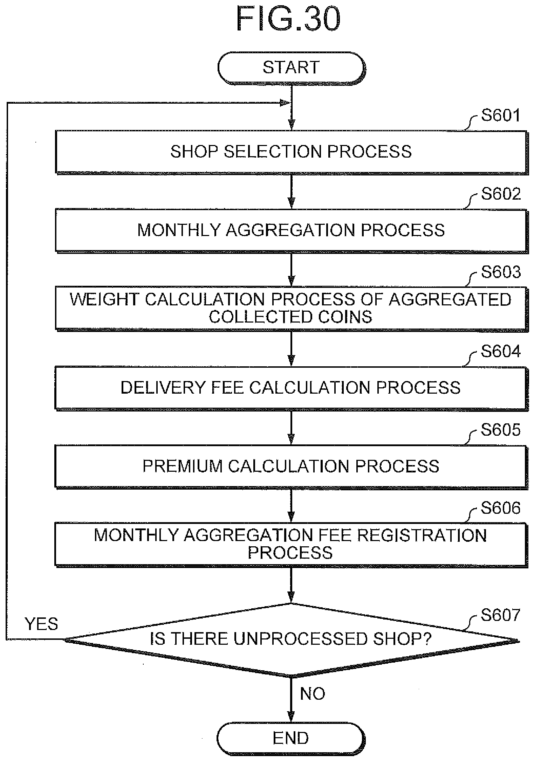

A process procedure for calculating in the coin counting machine 700 according to the fifth embodiment a monthly fee depending on collection of coins from the shop 1 to the cash center 2 is explained below. FIG. 30 is a flowchart of the process procedure for calculating in the coin counting machine 700 the monthly fee for collecting the coins.

The monthly aggregation processing unit 716d selects the shop 1 for which the monthly aggregation processing has not been yet performed (Step S601), aggregates the number of the coins by the denomination of the coins delivered within one month from this shop 1 by aggregating the counting results data 715e for one month corresponding to the shop 1, and registers a result of this aggregation in the monthly aggregation data 715f (Step S602). Moreover, the weight calculation processing unit 716b calculates a weight of the coins delivered within one month from this shop 1 based on the number of the coins by the denomination of the coins delivered within one month, which is the result of the aggregation, and the weight of one coin by the denomination of the coin, and stores the calculated weight in the memory 315 as the coin weight data 315b (Step S603).

The fee calculation processing unit 716c calculates the delivery fee by using the coin weight data 315b and the delivery fee table 715c (Step S604). Moreover, the fee calculation processing unit 716c calculates the premium by using the amount of the coins calculated based on the number of the coins by the denomination of the coins corresponding to the shop 1 in the monthly aggregation data 715f and the premium table 715d (Step S605) . The monthly aggregation processing unit 716d registers the coin weight data 315b, the delivery fee, and the premium in a corresponding record of the monthly aggregation data 715f (Step S606).

When there is the shop 1 for which the monthly aggregation processing is not yet performed (YES: Step S607), the process procedure is returned to Step S601. If there is no shop for which the monthly aggregation processing is not performed (NO: Step S607), the process procedure is finished.

Note that, though the concrete explanation is omitted, the calculation of the delivery fee and the premium for the delivery of the banknotes of one month based on the total quantity of the banknotes delivered in one month obtained in the banknote counting machine 400 can be realized with the similar configuration. This period is not limited to one month and can be two months, one year, and the like.

As has been explained above, in the fifth embodiment, the number of the money by the denomination of the money delivered to the cash center 2 is counted each time the money is delivered and the result of the counting is accumulated, the number of the money by the denomination of the delivered money is aggregated for a predetermined period in each of the shops 1, the weight of the delivered money is calculated based on the result of the aggregation, the number of the money by the denomination of the money, and the weight of one money by the denomination of the money, and the delivery fee for the predetermined period is calculated based on the calculated weight. Moreover, the amount of the money delivered within one month is calculated by using the result of the aggregation, that is, the number of the money by the denomination of the money, and the premium for the predetermined period is calculated based on this amount. With this configuration, the fee that is appropriate for the labor involved in the delivery of the money by the person in charge of the secure transportation company and the like can be calculated appropriately and efficiently.

### SIXTH EMBODIMENT

In the first embodiment to the fifth embodiment, examples have been explained in which the fee and the premium for delivering the proceeds of sales, the change fund, and the like are calculated in each of the shops 1. However, it is possible that the same company has several shops 1 in the same area. In such an instance, a fee and a premium can be calculated based on a total delivered quantity of the money of a plurality of the shops 1. In a sixth embodiment, an example is explained in which the fee and the premium are calculated based on a total collected quantity of the money of the proceeds of sales of a plurality of the shops 1.

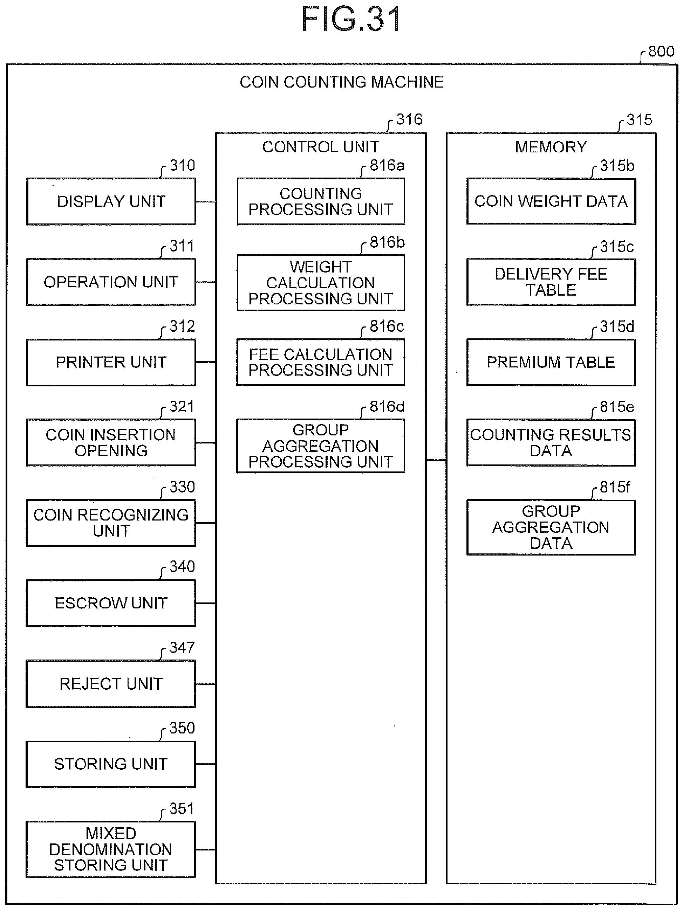

To begin with, an internal configuration of a coin counting machine 800 according to the sixth embodiment is explained below. FIG. 31 is a functional block diagram of the internal configuration of the coin counting machine 800. In the block diagram of the coin counting machine 800 shown in FIG. 31, the same reference numbers are given to the structural components that are the same as those of the coin counting machine 300 according to the second embodiment, and unique reference numbers are given to the structural components that are different from those of the coin counting machine 300. Moreover, in the explanation of the configuration of the coin counting machine 800, an explanation will be omitted of the structural components that are the same as those of the coin counting machine 300 according to the second embodiment, and an explanation will be given mainly of the structural components that are different from those of the coin counting machine 300.

As shown in FIG. 31, when the coin counting machine 800 according to the sixth embodiment is compared with the coin counting machine 300 according to the second embodiment, counting results data 815e stored in the memory 315 is different from the counting results data 315e according to the second embodiment. Moreover, the coin count data 315a that is stored in the memory 315 according to the second embodiment is not stored in the memory 315 according to the sixth embodiment. Moreover, group aggregation data 815f, which is not stored in the memory 315 according to the second embodiment, is additionally stored in the memory 315 according to the sixth embodiment.

In the second embodiment, because the fee is calculated each time the transported money is counted, the counting results data 315e contained the fee calculated each time the money is counted. In contrast, in the sixth embodiment, because the calculation of the fee is performed for a group of the shops, the counting results data 815e does not contain the information about the fee. Moreover, in the sixth embodiment, because the fee is calculated for the group of the shops, the group aggregation data 815f that is the result obtained by aggregating the number of the money delivered for each of the groups is prepared. The group aggregation data 815f contains the result obtained by aggregating the number of the money delivered from all the shops 1 belonging to the same group and the fee calculated based on this result of the aggregation.

When the coin counting machine 800 according to the sixth embodiment is compared with the coin counting machine 300 according to the second embodiment, a counting processing unit 816a, a weight calculation processing unit 816b, and a fee calculation processing unit 816c of the control unit 316 are different from the counting processing unit 316a, the weight calculation processing unit 316b, and the fee calculation processing unit 316c according to the second embodiment. Moreover, a group aggregation processing unit 816d, which is not included in the control unit 316 according to the second embodiment, is additionally included in the control unit 316 of the coin counting machine 800 according to the sixth embodiment. The sixth embodiment is explained below mainly by explaining the difference thereof with the second embodiment.

The counting processing unit 816a registers a result of counting in the counting results data 815e. However, because the fee is not calculated each time the counting is performed, the counting results data 815e does not include the fee. Moreover, because the fee is not calculated each time the counting is performed, the counting processing unit 816a does not also perform the processing to display on the display unit 310 the fee corresponding to the result of the counting.

The weight calculation processing unit 816b is a processing unit that calculates a weight of the coins delivered from all the shops 1 belonging to the same group. The weight calculation processing unit 816b calculates a weight of the coins delivered from all the shops 1 belonging to the same group based on the group aggregation data 815f, which is the result of the aggregation of the number of the coins delivered from all the shops 1 belonging to the same group, and the weight of one coin by the denomination of the coin, and stores the calculated weight in the memory 315 as the coin weight data 315b.

The fee calculation processing unit 816c calculates an amount corresponding to the number of the coins delivered from all the shops 1 belonging to the same group and contained in the group aggregation data 815f and calculates the premium corresponding to the group by using the calculated amount and the premium table 315d. Moreover, the fee calculation processing unit 816c calculates the delivery fee for the group by using the coin weight data 315b and the delivery fee table 315c.

The group aggregation processing unit 816d aggregates the result of the counting for each of the groups contained in the counting results data 815e and adds this result of the aggregation in the group aggregation data 815f. Moreover, the group aggregation processing unit 816d outputs the weight of the coins delivered from all the shops 1 belonging to the same group calculated by the weight calculation processing unit 816b and the premium and the delivery fee calculated by the fee calculation processing unit 816c to a corresponding record of the group aggregation data 815f.

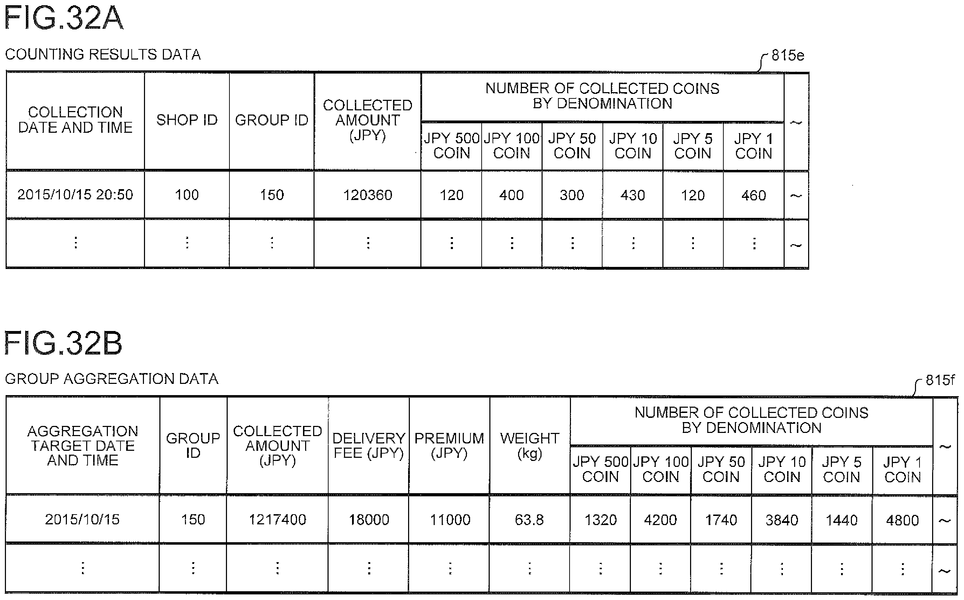

An example of data stored in the memory 315 of the coin counting machine 800 according to the sixth embodiment is explained below. FIGS. 32A and 32B are views for explaining an example of the data stored in the memory 315 of the coin counting machine 800.

As shown in FIG. 32A, the counting results data 815e is data in which a shop ID, a group ID, a collected amount, number of the collected coins by the denomination of the coins, and the like are mapped with a date and time on which the collection is performed. The counting results data 715e does not include the fee, the premium, and the weight.

The group aggregation data 815f shown in FIG. 32B is data in which the collected amount, the delivery fee, the premium, the weight of the delivered coins, and the number of the collected coins by the denomination of the coins are mapped with the aggregation target date and time and the group ID. The example shown in FIG. 32B shows that the group aggregation data 815f is mapped with "2015/10/15" as the aggregation target date and time and "150" as the group ID. Moreover, in this group aggregation data 815f, the collected amount is JPY 1,217,400, the delivery fee is JPY 18,000, the premium is JPY 11,000, and the weight of the delivered money is 63.8 kg. Moreover, regarding the number of the coins by the denomination of the coins collected from all the shops 1 belonging to the same group, 1320 JPY 500 coins, 4200 JPY 100 coins, 1740 JPY 50 coins, 3840 JPY 10 coins, 1440 JPY 5 coins, and 4800 JPY 1 coins are present.

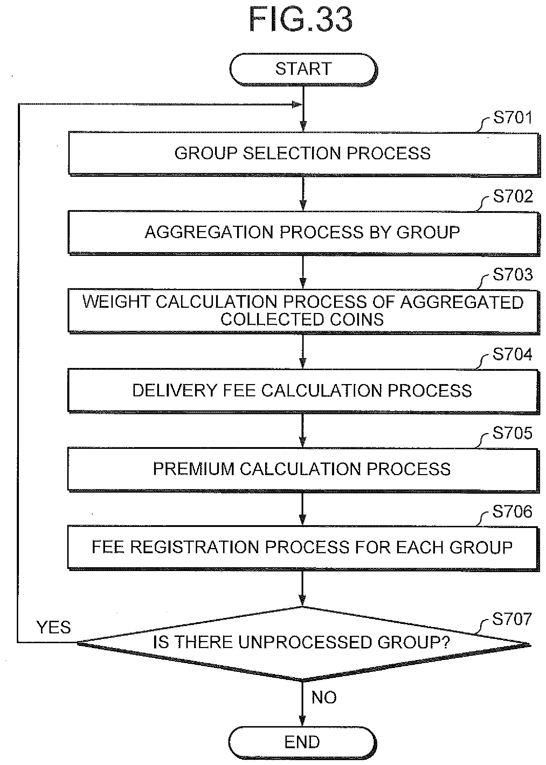

A process procedure for calculating in the coin counting machine 800 according to the sixth embodiment a fee for each of the groups depending on collection of coins from the shops 1 to the cash center 2 is explained below. FIG. 33 is a flowchart of the process procedure for calculating in the coin counting machine 800 the fee for collecting the coins by the group.

The group aggregation processing unit 816d selects a group for which the aggregation processing has not been yet performed (Step S701), aggregates the number of the coins by the denomination of the coins delivered from all the shops 1 belonging to the group by aggregating the counting results data 815e of all the shops 1 belonging to the group, and registers the result of this aggregation in the group aggregation data 815f (Step S702). The weight calculation processing unit 816b calculates a weight of the coins delivered from the shops 1 belonging to the group to the cash center 2 based on the number of the coins by the denomination of the coins delivered from all the shops 1 belonging to the group to the cash center 2, which is the result of the aggregation, and the weight of one coin by the denomination of the coin, and stores the calculated weight in the memory 315 as the coin weight data 315b (Step S703) .

The fee calculation processing unit 816c calculates the delivery fee by using the coin weight data 315b and the delivery fee table 315c (Step S704) and calculates the premium by using the amount of the coins calculated from the number of the coins by the denomination of the coins contained in the group aggregation data 815f of the corresponding group and the premium table 715d (Step S705). The group aggregation processing unit 816d registers the coin weight data 315b, the delivery fee, and the premium in a corresponding record of the group aggregation data 815f (Step S706).

When there is a group for which the aggregation processing is not yet performed (YES: Step S707), the process procedure is returned to Step S701. If there is no group for which the aggregation processing is not performed (NO: Step S707), the process procedure is finished.

Note that, though the concrete explanation is omitted, the calculation of the delivery fee and the premium for the delivery of the banknotes of a certain group based on the total quantity of the delivery fee for the banknotes delivered to the certain group obtained in the banknote counting machine 400 can be realized with the similar configuration.

As has been explained above, in the sixth embodiment, the number of the money by the denomination of the money delivered to the cash center 2 is counted each time the money is delivered and the result of the counting is accumulated, the number of the money by the denomination of the delivered money is aggregated for each of the groups formed by a plurality of the shops 1, the total weight of the delivered money is calculated based on the result of this aggregation and the weight of one money by the denomination of the money, and the delivery fee for a certain group is calculated based on the calculated weight. Moreover, the amount of the money delivered from all the shops 1 belonging to the group is calculated by using the number of the money by the denomination of the money, which is the result of the aggregation, and the premium for the group is calculated based on the calculated amount. With this configuration, the fee that is appropriate for the labor involved in the delivery of the money by the person in charge of the secure transportation company and the like can be calculated appropriately and efficiently.

Note that, in the second, the fifth and the sixth embodiments, the explanation has been given assuming that the coin counting machines 300, 700, and 800 and the banknote counting machine 400 are separate devices; however, the present invention is not limited to this configuration. For example, the coin counting machines 300, 700, and 800 and the banknote counting machine 400 can be integrated in one device and the premium can be calculated based on the total amount of the counted coins and banknotes and the delivery fee can be calculated based on the total weight of the counted coins and banknotes. In another configuration in which the coin counting machines 300, 700, and 800 and the banknote counting machine 400 are separate devices, for example, the banknote counting machine 400 can be notified of the amount and weight of the coins counted in the coin counting machines 300, 700, and 800, and in the banknote counting machine 400, the premium can be calculated based on the total amount of the banknotes counted therein and the coins, and the delivery fee can be calculated based on the total weight of the banknotes counted therein and the coins. Moreover, the coin counting machines 300, 700, and 800 can be notified of the amount and weight of the banknotes counted in the banknote counting machine 400. In another configuration, a management apparatus can be arranged in addition to the coin counting machines 300, 700, and 800 and the banknote counting machine 400, the management apparatus can be notified of the amount and weight of the counted coins from the coin counting machines 300, 700, and 800, the management apparatus can be notified of the amount and weight of the counted banknotes from the banknote counting machine 400, and in the management apparatus, the premium can be calculated based on the total amount of the coins and the delivery fee can be calculated based on the total weight of the coins and banknotes.

The various structural components mentioned in the above first to sixth embodiments are functional and are not necessarily present physically. Decentralization and / or unification of various components are not limited to that shown in the drawings. All of or some of the components can be decentralized and / or unified in desired units, functionally or physically, depending on various load, operating conditions, and the like.

### [Industrial Applicability]

As explained above, the money handling apparatus, the fee calculating apparatus, the money handling method, and the fee calculation method according to the present invention are useful in that they can calculate the fee that is appropriate for the labor involved in the delivery of the money by the person in charge of the secure transportation company and the like appropriately and efficiently.

### [Explanation of Reference Numerals]

1 shop
2 cash center
3 proceeds of sales deposition machine
4 money counting machine
100 coin deposition machine
110, 210, 410 display/operation unit
115, 215, 315, 415, 515 memory
115a coin inventory amount data
115b coin collection data
115c, 315b coin weight data
115d, 215d, 315c, 415c, 515c, 715c delivery fee table
115e, 215e, 315d, 415d, 515d, 715d premium table
115f, 215f collection results data
116, 216, 316, 416, 516 control unit
116a, 216a deposition processing unit
116b, 216b collection processing unit
116c, 216c fee status display unit
116d, 216d, 316c, 416c, 516c, 716c, 816c fee calculation processing unit
120 accumulation and feeding unit
121 coin receiving inlet
122, 152 rotary disk
130, 330 coin recognizing unit
131, 231, 431 transport unit
132, 232, 432 recognition unit
133, 332 sorting member
139, 149, 159, 337, 338, 339, 348, 349 chute
140, 340, 341 escrow unit
143 bottom part
146 overflow unit
147, 226, 347, 447 reject unit
148 returning unit
150, 250 storing and feeding unit
170 collection box
171, 271 weight sensor
172 drawer
200 banknote deposition machine
215a banknote inventory amount data
215b banknote collection data
215c, 415b banknote weight data
221, 421 banknote receiving inlet
246 reject box
247 money removal outlet
251, 350 storing unit
300, 700, 800 coin counting machine
310, 510 display unit
311, 511 operation unit
312, 512 printer unit
315a coin count data
315e, 415e, 715e, 815e counting results data
316a, 416a, 716a, 816a counting processing unit
316b, 416b, 516b, 616b, 716b, 816b weight calculation processing unit
321 coin insertion opening
342 bottom plate
351 mixed denomination storing unit
400 banknote counting machine
415a banknote count data
450 stacking unit
500, 600 money request receiving machine
513 voice communication unit
515a, 615a request details data
515b money weight data
515e, 615e request results data
516a reception processing unit
516d, 616e voucher issuance processing unit
615f fee table
615g transport bag table
616a request reception processing unit 616d transport bag determining unit
715f monthly aggregation data
716d monthly aggregation processing unit
815f group aggregation data
816d group aggregation processing unit

## Claims

1. A money handling apparatus comprising:
an inserting unit for inserting money;
a storing unit for storing therein the money inserted from the inserting unit;
a determining unit that determines a money quantity which is a quantity of the money stored in the storing unit; and
a fee calculating unit that calculates a predetermined fee corresponding to the money quantity determined by the determining unit.

2. The money handling apparatus as claimed in claim 1, further comprising a memory for storing therein a fee table containing mapping of a plurality of money quantities with a corresponding fee, wherein the fee calculating unit calculates the predetermined fee corresponding to the money quantity determined by the determining unit based on the fee table stored in the memory.

3. The money handling apparatus as claimed in claim 2, wherein the determining unit measures the money quantity stored in the storing unit by using a sensor arranged for the storing unit.

4. The money handling apparatus as claimed in claim 1, further comprising
an acquiring unit that acquires number of each money stored in the storing unit; and
a memory for storing therein a unit money quantity of each money,
wherein the determining unit determines the money quantity stored in the storing unit based on the number of each money acquired by the acquiring unit and the unit money quantity of each money stored in the memory.

5. The money handling apparatus as claimed in claim 2, further comprising an output unit that outputs one or both of the money quantity and the predetermined fee.

6. The money handling apparatus as claimed in claim 2, further comprising an output unit that outputs at least two among a first money quantity that is the money quantity stored in the storing unit, a first fee corresponding to the first money quantity, a second money quantity corresponding to a second fee that is next to the first fee in the fee table, the second fee, and a difference between the second money quantity and the first money quantity.

7. The money handling apparatus as claimed in claim 1, further comprising a restriction control unit that restricts insertion of the money in the inserting unit when the money quantity stored in the storing unit is equal to or more than a predetermined threshold.

8. The money handling apparatus as claimed in claim 7, further comprising an attribute information acquiring unit that acquires attribute information of a user,
wherein the restriction control unit restricts insertion of the money in the inserting unit based on the attribute information acquired by the attribute information acquiring unit when the money quantity stored in the storing unit is equal to or more than a predetermined threshold.

9. The money handling apparatus as claimed in claim 1, further comprising an accumulated money quantity memory that stores therein an accumulated money quantity obtained by accumulating the money quantities determined by the determining unit,
wherein the fee calculating unit calculates the predetermined fee corresponding to the accumulated money quantity stored in the accumulated money quantity memory.

10. The money handling apparatus as claimed in claim 1, further comprising a goods number input unit that inputs number of goods,
wherein the fee calculating unit calculates the predetermined fee corresponding to the money quantity determined by the determining unit and a fee corresponding to the number of goods input by the goods number input unit.

11. The money handling apparatus as claimed in claim 10, further comprising:
a goods quantity determining unit that determines a quantity of goods based on the number of goods input by the goods number input unit; and
a goods fee calculating unit that calculates a fee based on the quantity of goods determined by the goods quantity determining unit.

12. A fee calculating apparatus comprising:
a receiving unit that receives number of money;
a memory that stores therein a unit money quantity of each money;
a determining unit that determines a money quantity of a planned transaction based on the number of money received by the receiving unit and the unit money quantity of each money stored in the memory; and
a fee calculating unit that calculates a predetermined fee corresponding to the money quantity determined by the determining unit.

13. The fee calculating apparatus as claimed in claim 12, further comprising a storing medium determining unit that determines a storing medium and number thereof for storing money corresponding to the money quantity determined by the determining unit.

14. A money handling method comprising:
recognizing money inserted in a predetermined inserting unit;
storing in a predetermined storing unit the money recognized at the recognizing;
determining a money quantity stored in the storing unit; and
calculating a predetermined fee corresponding to the money quantity determined at the determining.

15. A fee calculation method comprising:
receiving number of money;
determining a money quantity of a planned transaction based on the number of money received at the receiving and a unit money quantity of each money stored in a predetermined memory; and
calculating a predetermined fee corresponding to the money quantity determined at the determining.
